(19) **Europäisches Patentamt**
European Patent Office
Office européen des brevets

(11) **EP 3 956 721 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **20719645.2**

(22) Anmeldetag: **22.04.2020**

(51) Internationale Patentklassifikation (IPC):
*G02C 13/00* (2006.01)      *G01M 11/02* (2006.01)

(52) Gemeinsame Patentklassifikation (CPC):
**G02C 13/005; G01M 11/0228; G01M 11/0257**

(86) Internationale Anmeldenummer:
**PCT/EP2020/061206**

(87) Internationale Veröffentlichungsnummer:
**WO 2020/216788 (29.10.2020 Gazette 2020/44)**

(54) **BESTIMMUNG MINDESTENS EINES OPTISCHEN PARAMETERS EINES BRILLENGLASES**

DETERMINATION OF AT LEAST ONE OPTICAL PARAMETER OF A SPECTACLE LENS

DÉTERMINATION D'AU MOINS UN PARAMÈTRE OPTIQUE D'UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2019 EP 19170551**

(43) Veröffentlichungstag der Anmeldung:
**23.02.2022 Patentblatt 2022/08**

(73) Patentinhaber: **Carl Zeiss Vision International GmbH**
**73430 Aalen (DE)**

(72) Erfinder:
• **OHLENDORF, Arne**
**72074 Tübingen (DE)**
• **LEUBE, Alexander**
**72072 Tübingen (DE)**
• **WAHL, Siegfried**
**73072 Donzdorf (DE)**
• **RIFAI, Katharina**
**72072 Tübingen (DE)**

• **SAUER, Yannick**
**72072 Tübingen (DE)**

(74) Vertreter: **Altmann Stößel Dick Patentanwälte PartG mbB**
**Theodor-Heuss-Anlage 2**
**68165 Mannheim (DE)**

(56) Entgegenhaltungen:
EP-A1- 2 608 109      EP-A1- 2 830 001
EP-A1- 3 182 311      WO-A1-2017/125902
WO-A1-2017/134275     DE-A1-102011 115 239

• **BENJAMIN A. GOLDSTEIN ET AL: "Moving beyond regression techniques in cardiovascular risk prediction: applying machine learning to address analytic challenges", EUROPEAN HEART JOURNAL, 19. Juli 2016 (2016-07-19), Seite ehw302, XP055707786, GB ISSN: 0195-668X, DOI: 10.1093/eurheartj/ehw302**

**Beschreibung**

Gebiet der Erfindung

Die vorliegende Erfindung betrifft ein Verfahren, eine Vorrichtung und ein Computerprogramm zur Bestimmung mindestens eines optischen Parameters eines Brillenglases, sowie ein Verfahren zur Herstellung eines Brillenglases unter Verwendung des mindestens einen optischen Parameters.

Stand der Technik

Aus dem Stand der Technik sind Verfahren zur Bestimmung optischer Parameter von Brillengläsern bekannt.

Die Norm DIN EN ISO 13666:2013-10, im Folgenden auch als die "Norm" bezeichnet, Abschnitte 9-12 befasst sich mit optische Parametern von Brillengläsern, insbesondere im Hinblick auf sphärische, prismatische und astigmatische Eigenschaften der Brillengläser. Insbesondere definiert die Norm, 9.7.1 und 9.7.2 einen "bildseitigen Scheitelbrechwert" als Kehrwert einer paraxialen Schnittweite eines bildseitigen Brennpunktes sowie einen "objektseitigen Scheitelbrechwert" als den Kehrwert der paraxialen Schnittweite eines objektseitigen Brennpunktes, jeweils gemessen in Metern, wobei üblicherweise der "bildseitige Scheitelbrechwert" auch einfach als "Scheitelbrechwert" bezeichnet wird. Im Folgenden bezeichnet daher der Begriff des "Scheitelbrechwertes", sofern im Einzelnen nicht ausdrücklich erwähnt, den "bildseitigen Scheitelbrechwert". Für weitere Einzelheiten in Bezug auf den Scheitelbrechwert wird auf die Norm verwiesen.

Weiterhin stellt die Norm, 11.2 einen so genannten "sphärischen Brechwert" vor, der als Wert für den Scheitelbrechwert eines Brillenglases mit sphärischer Wirkung oder für den jeweiligen Scheitelbrechwert in einem von zwei Hauptschnitten des Brillenglases mit astigmatischer Wirkung festgelegt ist. Das Brillenglas mit astigmatischer Wirkung gemäß der Norm, 12 vereinigt ein paraxiales, paralleles Lichtbündel in zwei getrennten, senkrecht zueinander stehenden Brennlinien und weist daher nur in den beiden Hauptschnitten einen Scheitelbrechwert auf. Brillengläser mit astigmatischer Wirkung können hierbei auch als zylindrische Brillengläser, sphärozylindrische Brillengläser, torische Brillengläser oder sphärotorische Brillengläser bezeichnet werden. Die "astigmatische Wirkung" ist gemäß der Norm durch Zylinderstärke und Achslage festgelegt. Hierbei stellt die "Zylinderstärke" gemäß der Norm, 12.5 den Betrag einer "astigmatischen Differenz" dar, welche die Differenz zwischen den Scheitelbrechwerten in den beiden Hauptschnitten angibt. Die "Achslage" bezeichnet gemäß der Norm, 12.6 eine Richtung des Hauptschnittes, dessen Scheitelbrechwert als Referenzwert herangezogen wird. Schließlich wird nach der Norm, 12.8 die "Stärke" des Brillenglases mit astigmatischer Wirkung mittels drei Werten, umfassend die Scheitelbrechwerte jedes der beiden Hauptschnitte und die Zylinderstärke, angegeben. Alternativ kann ein arithmetisches Mittel der drei Werte als "sphärisches Äquivalent" angegeben werden, das definiert ist als sphärische Fernkorrektion $\pm$ ½ astigmatische Korrektion, wobei die "astigmatische Korrektion" durch Zylinderstärke und Achslage festgelegt ist.

Zur Bestimmung der Scheitelbrechwerte und der prismatischen Wirkungen von Brillengläsern wird üblicherweise ein spezielles "Scheitelbrechwert-Messgerät" gemäß der Norm, 8.5 eingesetzt. Nachteilig ist hieran, dass diese Messgeräte von einem Spezialisten, insbesondere einem Augenoptiker, welcher dazu ausgebildet ist, bedient werden müssen und dass diese Messgeräte ortsfest angeordnet sind. Derartige Messgeräte sind in der Regel darüber hinaus dazu eingerichtet, um Trageparameter der Brille zu ermitteln, wozu insbesondere ein Hornhautscheitelabstand, ein Pupillendurchmesser, ein Pupillenabstand und ein Vorneigungswinkel des Brillenglases gehören. Der "Hornhautscheitelabstand" ist gemäß der Norm, 5.27 festgelegt als Abstand des Hornhautscheitels (Cornea apex) des Auges eines Nutzers zur Rückfläche des Brillenglases, gemessen senkrecht zu einer Ebene der Brillenfassung (Fassungsebene). Die "Pupille" bezeichnet eine in jedem Auge des Nutzers vorhandene Eintrittsöffnung, durch welche Strahlung in Form von Licht in das Innere des Auges eintreten kann, deren Durchmesser und Abstände aus Aufnahmen des Nutzers, ermittelt werden kann. Gemäß der Norm, 5.18, ist der "Vorneigungswinkel" oder der "pantoskopische Winkel" festgelegt als Winkel in einer Vertikalebene zwischen einer Normalen zur Vorderfläche eines Brillenglases in dessen Mittelpunkt nach Kastensystem und einer horizontalen Fixierlinie des Auges.

DE 10 2011 115 239 A1 offenbart ein Ermitteln von Nutzerdaten für die Herstellung eines Brillenglases zu einer ausgewählten Brillenfassung für einen Nutzer. Ein erfindungsgemäßes Verfahren umfasst ein Bereitstellen eines Tracerdatensatzes, welcher die Form des Verlaufs des Randes des herzustellenden Brillenglases festlegt; ein Erfassen von Nutzerbilddaten zumindest eines Teilbereichs des Kopfes des Benutzers zusammen mit der vom Nutzer getragenen, ausgewählten Brillenfassung; und Ermitteln von Konturpunkten des Randes des zu fertigenden Brillenglases in den Nutzerbilddaten anhand des Tracerdatensatzes.

EP 2 608 109 A1 offenbart ein Verfahren zum Abschätzen der optischen Leistung von Korrekturlinsen in einer von einem Nutzer getragenen Brille, das die folgenden Schritte umfasst: Erfassen von zwei aufeinanderfolgenden Bildern des Gesichts des Nutzers, die vor einem Mittel zur Erfassung dieser beiden Bilder angeordnet sind, wobei eines dieser Bilder mit einer Brille und das andere ohne Brille erfasst wird; Kalibrieren eines der beiden erfassten Bilder in Bezug auf das andere; Identifizieren der Position der Iris jedes Auges in jedem Bild; Auswerten der Vergrößerung oder Verkleinerung jeder abgebildeten Iris: und Abschätzen der optischen Leistung der Korrekturlinsen auf der Grundlage der ausgewerteten Vergrößerung oder Verkleinerung.

EP 2 830 001 A1 und US 2015/0029323 A1 offenbaren jeweils eine Bildverarbeitungsvorrichtung, umfassend eine Bestimmungseinheit, die eine Eigenschaft einer Brille auf Grundlage einer ersten Konturposition und einer zweiten Konturposition bestimmt, wobei die erste Konturposition eine Konturposition eines Gesichts anzeigt, das ohne die Brille erscheint und aus den erhaltenen Gesichtsbilddaten eines Nutzers erfasst wird, und die zweite Konturposition eine Konturposition des Gesichts anzeigt, das durch die Brille erscheint und aus den erhaltenen Gesichtsbilddaten des Nutzers erfasst wird.

WO 2016/181310 A1 offenbart Vorrichtungen, Verfahren und Computerprogramme zur Bestimmung mindestens eines optischen Parameters von Brillengläsern. Hierzu wird mindestens ein Bild eines Objekts, das mindestens eine bekannte Dimension aufweist und das durch das Brillenglas aufgenommen wurde, einem Bildverarbeitungsverfahren unterzogen, um den mindestens einen optischen Parameter des Brillenglases zu ermitteln. Zu den optischen Parametern der Brillengläser gehören insbesondere der sphärische Brechwert, die Zylinderstärke und die Achslage des Brillenglases. Mittels der so bestimmten optischen Parameter kann sich der Brillenträger ein Zweitexemplar seiner Brillengläser und/oder Ersatzgläser anfertigen lassen.

WO 2017/125 902 A1 offenbart ein oder mehrere greifbare, computerlesbare, nicht vorübergehende Speichermedien mit computerausführbaren Befehlen, die, wenn sie von mindestens einem Computerprozessor ausgeführt werden, den mindestens einen Computerprozessor in die Lage versetzen, mindestens ein erfasstes Bild mindestens einer Reflexion eines Lichtblitzes auf einer Brillenlinse zu verarbeiten und einen oder mehrere optische Parameter der Linse auf der Grundlage mindestens eines erfassten Bildes zu bestimmen. WO 2017/134 275 A1 offenbart ein Verfahren zur Bestimmung einer optischen Achse einer Linse mit unbekannter Position und/oder Orientierung. Das Verfahren umfasst: a) Erhalten mindestens eines direkten Bildes eines Hintergrundes, der identifizierbare Merkmale umfasst; b) Bereitstellen einer Linse zwischen dem Hintergrund und einer Kamera, so dass Lichtstrahlen des Hintergrunds die Linse durchqueren, bevor sie auf der Kamera auftreffen; c) Verwenden der Kamera, um mindestens ein indirektes Bild zu erhalten, das den Hintergrund umfasst, wenn er durch die Linse betrachtet wird; d) Identifizieren mindestens eines identifizierbaren Merkmals im direkten Bild und eines entsprechenden identifizierbaren Merkmals im indirekten Bild; und e) Verwenden der Entsprechungen aus d), um eine optische Achse der Linse zu bestimmen, ohne die optische Achse der Linse in Bezug auf die Kamera auszurichten.

Aufgabe der Erfindung

Insbesondere ausgehend von der Offenbarung der EP 2 830 001 A1 und US 2015/0029323 A1 besteht die Aufgabe der vorliegenden Erfindung darin, ein Verfahren, eine Vorrichtung und ein Computerprogramm zur Bestimmung mindestens eines optischen Parameters eines Brillenglases, sowie ein Verfahren zur Herstellung des Brillenglases unter Verwendung des mindestens einen optischen Parameters bereitzustellen, welche die aufgeführten Nachteile und Einschränkungen des Standes der Technik zumindest teilweise überwinden.

Insbesondere sollen es das vorliegende Verfahren, Vorrichtung und Computerprogramm ermöglichen, mindestens einen optischen Parameter eines Brillenglases, vorzugsweise einen Scheitelbrechwert in einem Brillenglas mit sphärischer Wirkung oder die Zylinderstärke und den jeweiligen Scheitelbrechwert in einem von zwei Hauptschnitten in einem Brillenglas mit astigmatischer Wirkung, zu bestimmen, ohne dass hierzu Spezialgeräte erforderlich sind und daher die Bestimmung auch von Laien durchgeführt werden kann.

Offenbarung der Erfindung

Diese Aufgabe wird gelöst durch ein Verfahren, eine Vorrichtung und ein Computerprogramm zur Bestimmung mindestens eines optischen Parameters eines Brillenglases, sowie ein Verfahren zur Herstellung eines Brillenglases unter Verwendung des mindestens einen optischen Parameters mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist, d.h. auf eine Situation, in welcher A ausschließlich aus B besteht, als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung ein Verfahren zur Bestimmung mindestens eines optischen Parameters eines Brillenglases. Das Verfahren umfasst die folgenden Schritte a) und b), vorzugsweise in der angegebenen Reihenfolge, wobei auch eine teilweise zeitgleiche Ausführung der Verfahrensschritte möglich ist. Weiterhin können einzelne oder alle Schritte des Verfahrens wiederholt ausgeführt werden. Das Verfahren kann, zusätzlich zu den genannten Verfahrensschritten, auch weitere Verfahrensschritte umfassen.

Das Verfahren zur Bestimmung mindestens eines optischen Parameters eines Brillenglases umfasst die Merkmale des Anspruchs 1.

Unter einem "Brillenglas" wird gemäß der Norm, 8.1.1 und 8.1.2 eine optische Linse verstanden, welche zur Korrektion von Fehlsichtigkeiten des Auges dient, wobei die optische Linse vor dem Auge des Nutzers, aber nicht in Kontakt mit dem Auge getragen wird. Der Begriff der "Brille" bezeichnet im Rahmen der vorliegenden Erfindung ein beliebiges Element, welches zwei einzelne Brillengläser und eine Brillenfassung umfasst, wobei das Brillenglas zur Einbringung in eine Brillenfassung vorgesehen ist, welche von einem Nutzer der Brille ausgewählt wird. Anstelle des hier verwendeten Begriffs des "Nutzers" kann gleichbedeutend auch einer der Begriffe "Benutzer", "Brillenträger", "Subjekt" oder "Proband" verwendet werden.

Das hier vorgeschlagene Verfahren zur Bestimmung mindestens eines optischen Parameters eines Brillenglases eignet sich zu einer Vermessung der optischen Parameter eines Brillenglases. Der hierbei bestimmte Wert kann zudem für die Auswahl und Herstellung einer weiteren Brille, die z.B. als Zweitbrille oder als Ersatzbrille dienen kann, eingesetzt werden. In einer besonderen Ausgestaltung können mittels der vorliegenden Erfindung gewonnene Werte für die Korrektion der Brillengläser dazu benutzt werden, um, insbesondere bei einer virtuelle Betrachtung des Nutzers mit aufgesetzter Brille, das auch als so genanntes "Virtual Try on" bezeichnet wird, die beobachtbare Verkleinerung oder Vergrößerung durch die Brillengläser derart mit einzubeziehen, dass eine Darstellung des Nutzers mit Brille noch realistischer erscheint.

Der mit dem vorliegenden Verfahren ermittelte mindestens eine optische Parameter kann insbesondere dazu eingesetzt werden, um Werte für eine sphärozylindrische Linse zu ermitteln, welche als Brillenglas benutzt werden kann, um Refraktionsfehler des Auges mittels Korrektion derart zu kompensieren, dass sich eine möglichst optimale Bildqualität für den Nutzer erzielen lässt. Der Begriff des "optischen Parameters" bezeichnet hierbei einen Wert für eine Eigenschaft des Brillenglases, der sich insbesondere bei der Herstellung des Brillenglases aus dem Glasrohling oder Linsenrohling einstellen lässt, bevorzugt um die angestrebte Korrektion zu erzielen. Zu einer Beschreibung der sphärozylindrischen Linse eignen sich verschiedene Darstellungsweisen. Die Norm legt in Abschnitt 11.2 hierfür einen "sphärischen Brechwert" fest, der als Wert für einen Scheitelbrechwert eines Brillenglases mit sphärischer Wirkung oder für den jeweiligen Scheitelbrechwert in einem von zwei Hauptschnitten des Brillenglases mit astigmatischer Wirkung definiert ist. Nach der Norm, 9.7.1-9.7.2 ist der "Scheitelbrechwert" als Kehrwert einer paraxialen Schnittweite eines bildseitigen Brennpunktes, jeweils gemessen in Metern, festgelegt. Das sphärozylindrische Brillenglas mit astigmatischer Wirkung vereinigt gemäß der Norm, 12, ein paraxiales, paralleles Lichtbündel in zwei getrennten, zueinander senkrecht stehenden Brennlinien, und besitzt daher nur in den beiden Hauptschnitten einen Scheitelbrechwert. Die "astigmatische Wirkung" ist hierbei durch Zylinderstärke und Achslage festgelegt. Hierbei stellt die "Zylinderstärke" gemäß der Norm, 12.5 den Betrag einer "astigmatischen Differenz" dar, welche den Unterschied zwischen den Scheitelbrechwerten in den beiden Hauptschnitten angibt. Die "Achslage" bezeichnet gemäß der Norm, 12.6 eine Richtung des Hauptschnittes, dessen Scheitelbrechwert als Referenzwert herangezogen wird. Schließlich wird nach der Norm, 12.8 die "Stärke" des Brillenglases mit astigmatischer Wirkung mittels drei Werten, umfassend die Scheitelbrechwerte jedes der beiden Hauptschnitte und die Zylinderstärke, angegeben.

Nach L. N. Thibos, W. Wheeler und D. Horner (1997), Power Vectors: An Application of Fourier Analysis to the Description and Statistical Analysis of Refractive Error, Optometry and Vision Science 74 (6), S. 367-375, eignet sich zur Beschreibung einer beliebigen sphärozylindrischen Linse und/oder des Refraktionsfehlers jeweils die Angabe eines Sehstärkevektors, welcher durch genau einen Punkt in einem dreidimensionalen dioptrischen Raum beschrieben werden kann, wobei der dreidimensionale dioptrische Raum durch Koordinaten aufgespannt werden kann, welche der Sehstärke und der Zylinderstärke entsprechen bzw. damit korreliert sind.

Gemäß Schritt a) des vorliegenden Verfahrens erfolgt ein Aufnehmen mindestens eines Bildes unter Verwendung eines Brillenglases. Der Begriff des "Bildes" betrifft eine zweidimensionale oder drei-dimensionale Darstellung eines Gegenstandes, die auch als "Abbildung" bezeichnet wird, mittels einer optischen Aufnahmeeinheit, im Folgenden als "Kamera" bezeichnet. Hierzu kann eine Aufnahme eines einzelnen Bildes oder mehrerer Bilder, insbesondere einer Videosequenz, erfolgen. Hierbei erfolgt die Aufnahme des mindestens einen Bildes mittels der Kamera derart, dass das Brillenglas so zwischen der Kamera und dem abzubildenden Gegenstand so angeordnet wird, dass ein Verlauf eines von der Kamera ausgehenden oder auf die Kamera auftreffenden Lichtstrahls, der auch als "Strahlengang" bezeichnet wird, durch das Brillenglas hindurch geführt wird.

Erfindungsgemäß erfolgt das Aufnehmen des mindestens einen Bildes gemäß Schritt a) derart, dass der auf dem mindestens einen Bild dargestellte Gegenstand zumindest ein Auges des Nutzers umfasst, wobei das Brillenglas dadurch zwischen der Kamera und dem abzubildenden Gegenstand angeordnet werden kann, dass der Nutzer das Brillenglas vorzugsweise bestimmungsgemäß trägt. Ein "bestimmungsgemäßes Tragen des Brillenglases" durch den Nutzer bedeutet, dass der Nutzer das Brillenglas derart verwendet, dass es seine Funktion gemäß der Norm, 8.1.1 und 8.1.2 zur Korrektur von Fehlsichtigkeiten des Auges des Nutzers ausüben kann. Hierzu kann der Nutzer insbesondere eine das Brillenglas umfassende Brille derart an seinem Gesicht anordnen, dass das Brillenglas die vorgesehene Funktion ausüben kann.

In einer besonders bevorzugten Ausgestaltung der vorliegenden Erfindung kann zusätzlich zu dem mindestens einem Bild, auf dem der Nutzer bestimmungsgemäß die das Brillenglas umfassende Brille trägt, mindestens ein weiteres Bild des Nutzers als Vergleichsbild aufgenommen werden, auf welchem der Nutzer die Brille nicht trägt, wobei die übrigen bei der Aufnahme des mindestens einen weiteren Bildes verwendeten Parameter möglichst unverändert sein sollen. Das mindestens eine weitere Bild des Nutzers ohne Brille kann, wie unten näher erläutert, für die gemäß Schritt b) erfolgende Bestimmung des mindestens einen optischen Parameters des Brillenglases im Rahmen der Bildverarbeitung somit als Vergleichsbild herangezogen werden kann. In einer alternativen oder zusätzlichen Ausgestaltung kann auf ein Vergleichsbild verzichtet werden, insbesondere dann, wenn auf bereits vorhandene Bilder desselben Gegenstands ohne Brille oder auf bereits vorhandene geometrische Abmessungen der Augen des Nutzers und/oder der an die Augen angrenzenden Gesichtspartie des Nutzers zurückgegriffen werden oder entsprechende Daten mittels Bildverarbeitung zumindest näherungsweise ermittelt werden kann.

Erfindungsgemäß stellt das gemäß Schritt a) aufgenommene mindestens eine Bild somit zumindest ein Auge des Nutzers dar, wobei das Auge des Nutzers, wie erwähnt, unter bestimmungsgemäßen Tragen des Brillenglases durch den Nutzer aufgenommen wird. Hierfür kann ein einzelnes gemäß Schritt a) aufgenommenes Bild verwendet werden oder eine Mehrzahl an gemäß Schritt a) aufgenommenen Bilder, insbesondere um auf diese Weise eine erhöhte Messsicherheit zu erhalten.

Wie weiterhin bereits erwähnt, dient die Kamera als optische Aufnahmeeinheit zur Aufnahme eines oder mehrerer Bilder des Auges oder der Augen des Nutzers, während der Nutzer eine das Brillenglas umfassende Brille trägt. Die Kamera kann hierbei vorzugsweise von einen mobilen Kommunikationsgerät umfasst sein. Der Begriff des "mobilen Kommunikationsgeräts" umfasst hierbei insbesondere ein Mobiltelefon (Handy), ein Smartphone oder ein Tablet. Andere Arten von mobilen Kommunikationsgeräten sind jedoch denkbar. Andere Arten von Kameras sind jedoch möglich. Insbesondere kann es sich hierbei um wenigstens eine Rückkamera oder bevorzugt um wenigstens eine Frontkamera des mobilen Kommunikationsgeräts handeln. Auf diese Weise kann das gewünschte Bild des Auges oder der Augen des Nutzers mittels der wenigstens einen Kamera in vorteilhafter Weise an jedem beliebigen Ort aufgenommen werden.

In einer besonderen Ausgestaltung kann die wenigstens eine Kamera eine Sensitivität im sichtbaren Spektralbereich, d.h. gemäß Norm ISO 20473:2007 bei einer Wellenlänge von 380 nm bis 780 nm aufweisen, insbesondere um Aufnahmen bei Tageslicht und/oder bei künstlicher Beleuchtung, beispielsweise in einem beleuchteten Bereich eines Zimmers, vornehmen zu können. Alternativ oder zusätzlich kann die wenigstens eine Kamera eine Sensitivität im infraroten Spektralbereich, d.h. bei einer Wellenlänge von 780 nm bis 1 mm, bevorzugt von 780 nm bis 3 $\mu$m, insbesondere von 780 nm bis 1,4 $\mu$m (nach der Norm, Abschnitt 4.4, auch als "IR-A" bezeichnet), aufweisen. Um eine Infrarotstrahlung bereitzustellen, kann hierfür eine Lichtquelle vorgesehen sein, welche im infraroten Spektralbereich abstrahlt, insbesondere mit einer Wellenlänge, für welche die Kamera eine ausreichende Sensitivität aufweist. Die Lichtquelle kann vorzugsweise ausgewählt sein aus einer Mikroglühlampe oder einem IR-Emitter auf Festkörperbasis.

Gemäß Schritt b) erfolgt eine Bestimmung des mindestens einen optischen Parameters des Brillenglases mittels Bildverarbeitung des mindestens einen Bildes, das während Schritt a) aufgenommen wurde. Aus dem von der wenigstens einen Kamera aufgenommenen mindestens einen Bild können mittels Bildverarbeitung, bevorzugt in einer dafür eingerichteten Auswerteeinheit, der gewünschte mindestens eine optische Parameter des Brillenglases bestimmt werden. Wie bereits erwähnt, bezeichnet der Begriff des "Scheitelbrechwerts" gemäß der Norm, 9.7.1-9.7.2 den Kehrwert der paraxialen Schnittweite des bildseitigen Brennpunktes. Ein sphäro-zylindrisches Brillenglas mit astigmatischer Wirkung besitzt in beiden Hauptschnitten einen Scheitelbrechwert, wobei die astigmatische Wirkung durch Zylinderstärke und Achslage festgelegt ist.

Wie weiterhin bereits erwähnt, stellt das gemäß Schritt a) mindestens eine aufgenommene Bild zumindest eine ein Auge des Nutzers umfassende Augenpartie des Nutzers dar, aus der sich mittels Bildverarbeitung unter Ermittlung von geometrischen Abmessungen des Auges der mindestens eine optische Parameter des Brillenglases bestimmen lässt. Der Begriff "geometrische Abmessungen des Auges" umfasst hierbei eine im Folgenden erwähnte Abmessung in Bezug auf jedes der beiden Augen des Nutzers. Hierzu gehören insbesondere Abmessungen im Hinblick auf die Pupille des Nutzers, insbesondere eine Lage und/oder ein Durchmesser der Pupille und/oder der die Pupille umgebende Iris. Wie oben bereits definiert, bezeichnet die "Pupille" eine in jedem Auge des Nutzers vorhandene Eintrittsöffnung, durch welche Licht in das Innere des Auges eintreten kann. In umgekehrter Richtung kann die Pupille als Austrittsöffnung betrachtet werden, durch welche eine Blickrichtung des Nutzers aus dem Auge auf die Umgebung festgelegt werden kann.

Hierbei wird ein gemeinsamer Durchmesser von Pupille und Iris als geometrische Abmessung des Auges des Nutzers verwendet. Vorzugsweise kann eine Bestimmung dieses Durchmessers mittels einer Ermittlung eines Weiß-zu-weiß Abstandes im Auge des Nutzers erfolgen. Der "Weiß-zu-weiß Abstand" bezeichnet hierbei den gemeinsamen Durchmesser eines von der Hornhaut (Cornea) geschützten transparenten Bereichs des jeweiligen Auges, der die Pupille und die Iris des Auges umfasst, die von einem so genannten "weißen Bereich" des Auges umgeben werden. Für weitere Einzelheiten wird auf die unten stehenden Ausführungsbeispiele verwiesen. Weitere Arten der Bestimmung des Durchmessers von Pupille und/oder Iris sind jedoch möglich. Alternativ oder zusätzliche wird ein horizontaler Abstand zwischen einem rechten Augenwinkel und einem linkem Augenwinkel des Auges und/oder ein vertikaler Abstand zwischen einem Oberlid und einem Unterlid des Auges als geometrische Abmessung des Auges des Nutzers angegeben.

In einer besonders bevorzugten Ausgestaltung der vorliegenden Erfindung kann zur Bestimmung von Absolutwerten für die geometrischen Abmessungen des Auges des Nutzers mittels Bildverarbeitung darüber hinaus ein Abstand zwischen dem betreffenden Auge und der Kamera einbezogen werden. In einer Ausgestaltung können hierbei für eine Angabe des Abstandes des Auges des Nutzers von der Kamera bekannte oder geschätzte Werte verwendet werden. In einer bevorzugten Ausgestaltung kann eine messtechnische Erfassung des Abstandes zwischen dem Auge des Nutzers und der Kamera erfolgen. Hierzu kann die Auswerteeinheit weiterhin über eine Einrichtung zur Erfassung des Abstands des Auges des Nutzers von der Kamera verfügen. Hiermit kann durch Bildverarbeitung des Bildes des Auges des Nutzers, welches bevorzugt von der Kamera gemäß Schritt a) aufgenommen wurde, ein auch als "Pupillendistanz" bezeichneter Abstand zwischen der Kamera und dem Auge des Nutzers ermittelt werden. Hierzu lassen sich bekannte Algorithmen einsetzen, insbesondere Pixelmatching; künstliche Intelligenz, bevorzugt maschinelles Lernen, besonders bevorzugt neuronale Netzwerke, insbesondere zur Klassifikation oder zur Regression, d.h. Anpassung von Parametern an eine vorgegebene Funktion (Fit). In einer weiteren Ausgestaltung können mindestens zwei Kameras vorgesehen sein, die gemeinsam in Form einer Stereokamera angeordnet sind und daher zur Erfassung des Abstands des Auges des Nutzers von dem Bildschirm eingerichtet sind. Die Auswertung kann hierbei durch Triangulation bevorzugt über eine bekannte Pixelanzahl der Kamera bei Detektion eines bekannten Gegenstandes oder Bildinhaltes erfolgen. Alternativ oder zusätzlich kann das die Kamera umfassende mobile Kommunikationsgerät über einen gesonderten Entfernungsmesser verfügen, welcher zur Bestimmung der Pupillendistanz zwischen der Kamera und dem Auge des Nutzers eingerichtet ist.

Zusätzlich zu den geometrischen Abmessungen des Auges des Nutzers, die aus dem mindestens einen Bild, auf dem der Nutzer bestimmungsgemäß die das Brillenglas umfassende Brille trägt, ermittelt wurden, können Vergleichsdaten zu den geometrischen Abmessungen des Auges des Nutzers ohne Brille vorliegen. Wie bereits erwähnt, kann hierzu mindestens ein weiteres Bild des Nutzers als Vergleichsbild aufgenommen werden, auf dem der Nutzer die Brille nicht trägt, wobei die übrigen Parameter der Aufnahme des Bildes möglichst unverändert sein sollen. Alternativ oder zusätzlich kann auf bereits vorhandene Bilder oder auf bereits bekannte geometrische Abmessungen der Augen des Nutzers zurückgegriffen werden oder entsprechende Daten können mittels der Bildverarbeitung zumindest näherungsweise ermittelt werden. Aus einem Vergleich der geometrischen Abmessung der Augen des Nutzers, die aufgenommen wurden, während der Nutzer die das Brillenglas umfassende Brille trägt, und der Vergleichsdaten zu den geometrischen Abmessungen des Auges des Nutzers ohne Brille kann, insbesondere unter Verwendung der Auswerteeinheit, eine Änderung der geometrischen Abmessungen des Auges des Nutzers ermittelt werden, welche erfindungsgemäß dazu eingesetzt werden kann, auf ein sphärisches Äquivalent der mittels des Brillenglases erfolgten Fernkorrektion des Auges des Nutzers zu schließen.

Welche Änderung der geometrischen Abmessungen des Auges des Nutzers beobachtbar ist, hängt zunächst davon ab, welche dioptrische Wirkung das eingesetzte Brillenglas aufweist. Ein Brillenglas mit negativer dioptrischer Wirkung, das auch als "Minusglas" bezeichnet wird, und das sich daher zur Korrektion einer Kurzsichtigkeit (Myopie) des Nutzers einsetzen lässt, weist - im Vergleich zu einer Stützscheibe - eine erhöhe Dicke am Glasrand auf, während die Dicke in der Glasmitte verringert ist. Demgegenüber weist ein Brillenglas mit positiver dioptrischer Wirkung, das auch als "Plusglas" bezeichnet wird, und das sich daher zur Korrektion einer Weitsichtigkeit (Hyperopie) des Nutzers einsetzen lässt, eine - im Vergleich zu der Stützscheibe - verringerte Dicke am Glasrand auf, während die Dicke in der Glasmitte erhöht ist. Unter den Begriffen "Stützscheibe" oder "Demoscheibe" wird gemäß der Norm ISO 8624:2011 ein beliebiges Element aus einem leicht gewölbten, optisch transparenten Material ohne dioptrische Wirkung verstanden, welches dazu eingerichtet ist, um, insbesondere zu Demonstrationszwecken, als Vorlage für die Kontur eines Brillenglases zu dienen. Basierend auf der dioptrischen Wirkung und unter Berücksichtigung des Vorzeichens ihres Scheitelbrechwertes bewirkt das Brillenglas bei einem Blick von vorn durch das jeweilige Brillenglas hindurch auf das betreffende Auge des Nutzers, dass ein durch das Brillenglas sichtbarer Bereich der Augenpartie des Nutzers verändert dargestellt wird. Insbesondere tritt bei einem Minusglas eine Verkleinerung und bei einem Plusglas eine Vergrößerung der durch das Brillenglas sichtbaren Bereich der Augenpartie des Nutzers auf.

Gleichung (1) gibt wie folgt eine Abschätzung für einen Absolutwert einer beobachtbaren Veränderung $V_E$ des sichtbaren Bereichs der Augenpartie des Nutzers von einer Größe eines Scheitelbrechwerts S' des Brillenglases an:

$$V_E = \frac{1}{1 - \frac{d}{n} D_1} \cdot \frac{1}{1 - ((e+e')S')}, \qquad (1)$$

wobei für $d$ = 0,0005 m bei Vorliegen eines Minusglases und $d$ = 0,001 m bei Vorliegen eines Plusglases, eine Brechzahl $n$ = 1,5 oder 1,52 oder 1,6, $e$ = 0,012 m und $e'$ = 0,013348 m verwendet werden. $d$ ist hierbei die Dicke eines Brillenglases, e der Hornhautscheitelabstand (HSA) und e' die Summe aus dem HSA und einem Abstand des Hornhautscheitels zum Augendrehpunkt. $D_1$ ist der Brechwert der vorderen Linsenfläche, kann aber für kleine Werte einfach gleich dem Scheitelbrechwert S' bei planaren Brillengläsern (Planogläsern) gesetzt werden. Alternativ oder zusätzlich kann hier ein weiterer Wert für die Brechzahl verwendet werden, insbesondere von 1,67 oder 1,74 oder eine Kombination von Werten.

Die beobachtbare Veränderung $V_E$ des sichtbaren Bereichs der Augenpartie des Nutzers kann somit eine Veränderung mindestens eine der geometrischen Abmessungen, bevorzugt des oben definierten Weiß-zu-weiß Abstandes, aber auch des Abstandes der Augenwinkel oder der Augenlider, bewirken, die sich auf einfache Weise messtechnisch erfassen lässt. Gemäß Gleichung (1) ist die beobachtbare Veränderung $V_E$ des sichtbaren Bereichs der Augenpartie des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie des Nutzers kann somit auf Vorzeichen und Größe des Scheitelbrechwerts S' des jeweiligen Brillenglases, bei Vorliegen einer bekannten Kalibrierung auf das Vorzeichen und den Absolutwert des Scheitelbrechwerts S' des jeweiligen Brillenglases, geschlossen werden.

In einer besonderen Ausgestaltung kann, insbesondere zur Bestimmung der optometrischen Parameter Sphäre, Zylinder und Achse, eine algorithmische Auswertung unter Einsatz von künstlicher Intelligenz, insbesondere von maschinellem Lernen, bevorzugt mittels eines neuronalen Netzwerks, erfolgen. In einer besonders bevorzugten Ausgestaltung kann im Fall, dass Daten über einen Einfluss der sphärozylindrischen Korrektion auf meridionale Unterschiede der Vergrößerung und/oder der Verkleinerung vorliegen, bereits aus einem einzigen Bild auf die optometrischen Parameter Sphäre, Zylinder und Achse geschlossen werden.

In einer besonderen Ausgestaltung kann darüber hinaus, insbesondere zur Bestimmung der optometrischen Parameter Sphäre, Zylinder und Achse für die Fernkorrektion eine Oberflächenform der Hornhaut (Cornea) des Auges mit der Kamera aufgenommen werden, wobei vorzugsweise eine erste Aufnahme ohne und eine zweite Aufnahme unter Projektion einer beliebigen, jedoch bekannten Struktur, insbesondere einer Streifenstruktur, einer Schachbrettstruktur oder einer Struktur umfassend Kreuze oder Kreise, erfolgen kann. Basierend auf einer Ermittlung der Oberflächenform der Hornhaut kann auf fachmännisch bekannte Weise der astigmatische Anteil der Korrektion sowie der Achse bestimmt werden.

In einem weiteren Aspekt der vorliegenden Erfindung können das mindestens eine Bild, das die die Augen einschließende Augenpartie und/oder eine an die Augen angrenzende Gesichtspartie des Nutzers des Brillenglases umfasst, das gemäß Schritt a) unter Verwendung eines Brillenglases und das mindestens eine weitere Bild, das ohne Verwendung des Brillenglases als das mindestens eine Vergleichsbild aufgenommen wird, gemeinsam als ein bewegtes Muster in Bezug auf eine vorzugsweise statische Position des Brillenglases betrachtet werden. Anstelle oder zusätzlich zur Aufnahme des Vergleichsbilds kann auf ein bereits vorhandenes Vergleichsbild zurückgegriffen werden. Das mindestens eine Bild und das mindestens eine Vergleichsbild können schwarz-weiß, einfarbig oder mehrfarbig ausgestaltet sein.

Entsprechend erfolgt gemäß Schritt b) ein Bestimmen des mindestens eines optischen Parameters des Brillenglases mittels Bildverarbeitung des auf diese Weise festgelegten bewegten Musters. Hierbei umfasst die Bildverarbeitung mindestens einen Algorithmus der Bildanalyse, wobei zur Bildanalyse mindestens ein Bildstatistikparameter verwendet wird. Der Begriff des "Bildstatistikparameters" betrifft hierbei einen statischen Parameter, der sich auf das mindestens eine Bild, insbesondere auf mindestens einen ausgewählten Bereich, vorzugsweise auf mindestens ein Bildelement (*engl.* Pixel), des mindestens einen Bildes, insbesondere des bewegten Musters bezieht. Erfindungsgemäß wird der mindestens eine Bildstatistikparameter ausgewählt aus

- einer Orientierung mindestens einen ausgewählten Bereichs in dem mindestens einen Bild, insbesondere einer Kante in dem mindestens einen Bild;
- einer Grauwertverteilung in dem mindestens einen Bild oder mindestens einem ausgewählten Bereich hiervon;
- einem optischen Fluss des bewegten Musters in Richtung und Ausprägung;
- einer lokalen und globalen Änderung des bewegten Musters;
- einer Verteilung von Ortsfrequenzen mittels Fourier-Transformation.

Besonders bevorzugt kann der mindestens eine Bildstatistikparameter dazu dienen, um mittels des mindestens einen Bildes, insbesondere mittels des bewegten Musters, den mindestens einen optischen Parameter des Brillenglases zu ermitteln. Erfindungsgemäß wird eine Klassifikation oder eine Regression des mindestens einen Bildstatistikparameters vorgenommen. Der Begriff der "Klassifikation" bezeichnet hierbei eine Zuordnung eines Wertes zu einem von mindestens zwei festgelegten Wertebereichen, die als "Klassen" bezeichnet werden. Beispielsweise kann der Bildstatistikparameter in Bezug auf seine dioptrische Wirkung klassifiziert werde und so z.B. der Klasse "+ 0,5 Dioptrien" oder der Klasse "+ 1 Dioptrie" zugeordnet werden. Der Begriff der "Regression" bezeichnet dagegen eine Anpassung des mindestens einen Bildstatistikparameters an eine vorgegebene Funktion, wobei die Anpassung auch als "Fit" bezeichnet wird. Hierzu kann der Fit z.B. eine Funktion umfassen, die eine Beziehung zwischen dem ausgewählten Bildstatistikparameter, z.B. eine Orientierung einer Kante, und einer zugehörigen dioptrischen Wirkung herstellt. Im Fall der vorliegenden Erfindung, in der ein Wert für den mindestens einen optischen Parameter des Brillenglases aus einem kontinuierlichen Wertebereich ausgewählt werden kann, ist daher die Verwendung der Regression bevorzugt.

Zur Ermittlung des mindestens einen optischen Parameters des Brillenglases aus dem mindestens einen Bildstatistikparameter mittels Klassifikation oder Regression wird ein Verfahren künstlicher Intelligenz, insbesondere eines Verfahrens maschinellen Lernens, eingesetzt. Der Begriff des "maschinellen Lernens" bezieht sich auf ein Verfahren unter Verwendung von Künstlicher Intelligenz, das zum automatischen Erzeugen eines Models für die Klassifikation oder Regression eingesetzt wird. Hier kann bevorzugt ein maschinell lernender Algorithmus verwendet werden, welcher dazu eingerichtet, das gewünschte Model basierend auf einer Vielzahl von Trainingsdatensätzen zu erzeugen. Der maschinell lernende Algorithmus kann hierbei ein überwachter Algorithmus oder ein selbstlernender Algorithmus sein. Der maschinell lernende Algorithmus nutzt und/oder umfasst ein neuronales Netz, welches mittels des mindestens einen Trainingsdatensatzes vorzugsweise zu einem trainierten neuronalen Netzwerk entwickelt werden kann. Das neuronale Netz kann mindestens ein Element aufweisen ausgewählt aus hierarchischen Entscheidungsbäumen, Hough forest, regression forest, Convolutional Neural Network (CNN), Deep Neurales Network (DNN) Residual Neural Network, Pixelwise Voting, Pixel-wise Fusion Network, Deep learning. Zusätzlich ist eine Verwendung mindestens eines anderen Verfahrens der künstlichen Intelligenz, bevorzugt einer Kernel-Methode, insbesondere einer Support Vector Machine (SVM) möglich.

Insbesondere um das gewünschte trainierte neuronale Netzwerk zu erhalten, kann bevorzugt vor Schritt b), besonders bevorzugt vor Schritt a), ein Trainieren des neuronalen Netzwerks erfolgen. Hierzu werden vorzugsweise eine Vielzahl an Trainingsdatensätzen verwendet. Hierbei betrifft der Begriff des "Trainingsdatensatzes" einen Datensatz, der mindestens ein Paar umfassend ein Bild, bevorzugt ein bewegtes Muster aus dem oben genannten Bild und einem zugehörigen Vergleichsbild, sowie mindestens einen zugeordneten optischen Parameter umfasst, wobei der optische Parameter ausgewählt sein kann aus einem optischen Parameter des Brillenglases oder einer mit dem Brillenglas in Beziehung stehenden optischen Wirkung, insbesondere einer durch das Brillenglas in dem mit Brillenglas aufgenommenen Bild hervorgerufenen Vergrößerung oder Verzeichnung. Vorzugsweise kann der mindestens eine optische Parameter des Brillenglases ausgewählt sein aus einem sphärischen Brechwert, einem zylindrischer Brechwert mit Achslage und/oder einer Addition bei Gleitsichtgläsern. Andere optische Parameter des Brillenglases sind jedoch möglich.

Um eine ausreichende Anzahl an Trainingsdatensätzen zu erzeugen, kann hierfür vorzugsweise eine Datenbank, die eine Vielzahl an derartigen Datensätzen umfasst, verwendet werden. Hierbei können die hierfür verwendeten Datensätze eine Vielzahl an

- gemäß Schritt a) aufgenommenen Bildern,
- an künstlich erzeugten Bildern für Brillengläser mit unterschiedlichen optischen Parametern,
- an Videosequenzen, die manuell durch automatisierte Roboterbewegungen für verschiedene Brillengläser erstellt werden können, wobei das mindestens eine Brillenglas oder die mindestens eine Kamera bewegt werden können, oder
- an bearbeitenden Bildern, die durch Datenvergrößerung (*engl.* data augmentation) erstellt werden,

umfassen. Alternativ oder zusätzlich kann die Datenbank weitere Datensätze umfassen, die sich als Trainingsdatensätze für das ausgewählte neuronale Netzwerk eignen. Hierbei kann aus den Trainingsdatensätzen bevorzugt zunächst der mindestens eine Bildstatistikparameter bestimmt und hieraus anschließend der mindestens eine optische Parameter des Brillenglases ermittelt werden. Somit kann eine direkte, zeitsparende und zielgerichtete Zuordnung des mindestens einen optischen Parameter des Brillenglases zu dem bewegten Muster erfolgen.

Vorzugsweise können das mindestens eine Bild und das mindestens eine Vergleichsbild mittels mindestens einer Kamera aufgenommen werden, wobei eine von einem mobilen Kommunikationsgerät, insbesondere einem Smartphone oder einem Tablet, umfasste mindestens eine Kamera bevorzugt ist. Andere Arten von Kameras sind jedoch denkbar. Ebenso kann die Ermittlung des mindestens einen optischen Parameters des Brillenglases aus dem mindestens einen Bildstatistikparameter, insbesondere mittels Klassifikation oder Regression, bevorzugt mittels eines trainierten neuronalen Netzwerkes erfolgen, das auf dem mobilen Kommunikationsgerät gespeichert ist und dort ausgeführt werden kann, während das vorherige Trainieren des neuronalen Netzwerkes bevorzugt auf einem stationären Rechner durchgeführt werden kann. Andere Arten der Ausgestaltung sind jedoch denkbar.

Ist das Brillenglas wie üblich als zylindrische Linse ausgeformt, können Ausprägungen des mindestens einen Bildstatistikparameters vorzugsweise in zwei verschiedene Raumachsenrichtungen getrennt betrachtet werden. Weiterhin kann bei Auftreten eines Brechkraftverlaufs oder eines Vergrößerungsverlaufs auf dem Brillenglas, wie insbesondere bei einem Gleitsichtglas üblich, eine Veränderung des mindestens einen Bildstatistikparameters entlang des Brechkraftverlaufs verschieden sein. Um derartige Muster auswerten zu können, kann eine Vielzahl von unterschiedlichen Trainingsdatensätzen für entsprechend trainierte neuronale Netzwerke erstellt werden, um so verschiedene Arten von Brillengläsern bezüglich verschiedener Bildstatistikparameter zu klassifizieren.

Um eine Bestimmung der mindestens einen Raumachse durchführen zu können, kann ferner eine Ermittlung der relativen Orientierung des Brillenglases notwendig ermittelt werden. Hierzu lassen sich verschiedene Verfahren verwenden, die eine Rahmenerkennung (*engl.* frame detection) ermöglichen. Insbesondere kann am räumlichen Übergang am Rand des Brillenglases eine Diskontinuität des optischen Parameters, z.B. der Brechkraft oder der Vergrößerung, auftreten., wobei eine relative Position des Brillenglases bestimmt werden kann, wenn die Diskontinuität nachgewiesen wird. Andere Arten der Rahmeerkennung sind jedoch möglich.

In dieser besonders bevorzugten Ausgestaltung der vorliegenden Erfindung sind somit keine analytischen Beschreibungen zwischen einer Änderung des bewegten Musters, das zwischen dem mindestens einen Bild und dem mindestens einen Vergleichsbild angenommen wird, und dem mindestens einen optischen Parameter des Brillenglases erforderlich. Eine derartige nichtlineare, hochdimensionale Funktion kann hierbei vielmehr durch Einsetzen der Trainingsdatensätze, mit denen das ausgewählte neuronale Netzwerk zur Ermittlung des mindestens einen optischen Parameters des Brillenglases aus dem mindestens einen Bildstatistikparameter, insbesondere mittels Klassifikation oder Regression, trainiert wird, erzeugt und verwendet werden.

In einem weiteren Aspekt betrifft die vorliegende Erfindung ein Computerprogramm zur Bestimmung mindestens eines optischen Parameters eines Brillenglases, wobei das Computerprogramm dazu eingerichtet ist, die Bestimmung des mindestens eines optischen Parameters des Brillenglases gemäß dem hierin beschriebenen Verfahren zur Bestimmung mindestens eines optischen Parameters eines Brillenglases durchzuführen.

In einem weiteren Aspekt betrifft die vorliegende Erfindung ein Verfahren zur Herstellung eines Brillenglases, wobei die Herstellung des Brillenglases durch Bearbeitung eines Linsenrohlings (Norm, Abschnitt 8.4.1) oder eines Brillenglas-Halbfertigprodukts (Norm, Abschnitt 8.4.2) erfolgt, wobei der Linsenrohling oder das Brillenglas-Halbfertigprodukt jeweils anhand von Refraktionsdaten und optional Zentrierdaten bearbeitet wird, wobei eine Festlegung der Refraktionsdaten gemäß dem hierin beschriebenen Verfahren zur Bestimmung mindestens eines optischen Parameters eines Brillenglases erfolgt. Die Refraktionsdaten umfassen bevorzugt die Korrektion des Refraktionsfehlers des wenigstens einen Auges des Nutzers in Bezug auf die sphärische Korrektion und die astigmatische Korrektion mit Achslage, jeweils für die Ferne und/oder für die Nähe. Die Zentrierdaten umfassen bevorzugt wenigstens

- den Fassungsscheibenwinkel, den Winkel zwischen der Fassungsebene und der rechten bzw. linken Scheibenebene, gemäß der Norm, Abschnitt 17.3, und/oder
- die Koordinaten des Zentrierpunktes, d.h. den Betrag des Abstandes des Zentrierpunktes von der nasalen senkrechten Seite bzw. von der unteren waagerechten Seite des Kastensystems, gemessen in der Scheibenebene, gemäß der Norm, Abschnitt 17.4, und/oder
- den Hornhaut-Scheitelabstand, d.h. den Abstand zwischen der Rückfläche des Brillenglases und dem Apex der Hornhaut gemessen in Blickrichtung senkrecht zur Fassungsebene, gemäß der Norm, Abschnitt 5.27, und/oder
- den Vorneigungswinkel oder pantoskopischen Winkel, d.h. den Winkel in der Vertikalebene zwischen der Normale zur Vorderfläche eines Brillenglases in dessen Mittelpunkt nach Kastensystem und der Fixierlinie des Auges in Primärposition, die üblicherweise als horizontal angenommen wird, gemäß der Norm, Abschnitt 5.18, und/oder
- optional den Fern-Durchblickpunkt, d.h. die angenommene Lage des Durchblickpunktes auf einem Brillenglas für das Sehen in die Ferne unter bestimmten Bedingungen, gemäß der Norm, Abschnitt 5.16, und/oder
- optional den Nah-Durchblickpunkt, d.h. die angenommene Lage des Durchblickpunktes auf einem Brillenglas für das Sehen in die Nähe unter bestimmten Bedingungen, gemäß der Norm, Abschnitt 5.17.

In einem weiteren Aspekt betrifft die vorliegende Erfindung eine Vorrichtung zur Bestimmung mindestens eines optischen Parameters eines Brillenglases. Erfindungsgemäß umfasst die Vorrichtung

- wenigstens eine Kamera; und
- eine Auswerteeinheit

gemäß den Merkmalen des unabhängigen Anspruch 7.

In einer besonders bevorzugten Ausgestaltung kann die Auswerteeinheit weiterhin über eine Einrichtung zur Erfassung eines Abstands des Auges des Nutzers von dem Bildschirm oder der Kamera verfügen. Hierzu kann durch Bildverarbeitung ein Bild, welche von der Kamera insbesondere von der Augenpartie des Nutzers aufgenommen wurde, aus einer Bestimmung einer Pupillendistanz zwischen der Kamera und dem Auge des Nutzers eine Ermittlung des Durchmessers von Pupille und/oder Iris auszuführen. In einer bevorzugten Ausgestaltung können mindestens zwei Kameras vorgesehen sein, die gemeinsam in Form einer Stereokamera angeordnet sind und daher zur Erfassung des Abstands des Auges des Nutzers von dem Bildschirm eingerichtet sind. Alternativ oder zusätzlich kann die Vorrichtung einen Entfernungsmesser aufweisen, der zur Bestimmung der Pupillendistanz zwischen der Kamera und dem Auge des Nutzers eingerichtet ist.

Für Definitionen und optionale Ausgestaltungen des Computerprogramms und der Vorrichtung zur Bestimmung mindestens eines optischen Parameters eines Brillenglases sowie des Verfahrens zur Herstellung eines Brillenglases wird auf die oben oder unten stehende Beschreibung des Verfahrens zur Bestimmung mindestens eines optischen Parameters eines Brillenglases verwiesen.

Die erfindungsgemäße Vorrichtung und die vorliegenden Verfahren weisen gegenüber herkömmlichen Vorrichtungen und Verfahren zahlreiche Vorteile auf.

Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigen:

Figur 1A bis 1C      eine schematische Darstellung der Funktionsweise der vorliegenden Erfindung,

Figur 2A und 2B      ein Diagramm des Einflusses eines Brillenglases auf eine Veränderung $V_E$ als Funktion der Brechzahl $n$ des Materials des Brillenglases bei gleichem Hornhautscheitelabstand (Figur 2A) bzw. als Funktion des Hornhautscheitelabstands bei gleicher Brechzahl $n$ (Figur 2B); und

Figur 3      ein bevorzugtes Ausführungsbeispiel des erfindungsgemäßen Verfahrens und der zugehörigen Vorrichtung zur Bestimmung des mindestens eines optischen Parameters des Brillenglases.

Ausführungsbeispiele

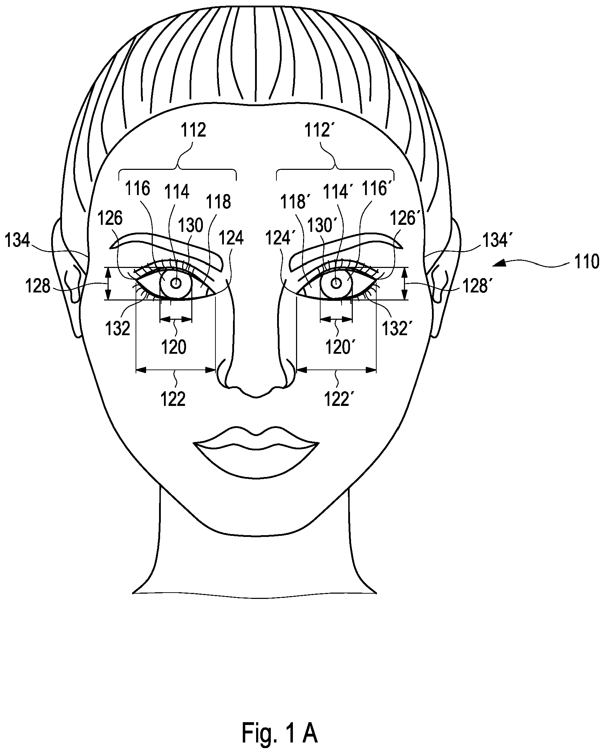

In den Figuren 1A bis 1C ist schematisch die Funktionsweise der vorliegenden Erfindung dargestellt.

Figur 1A zeigt hierzu schematisch eine Augenpartie 110 eines Nutzers, mit einem rechten Auge 112 und einem linken Auge 112'. Die Begriffe "rechts" und "links" sind hierbei aus einer Blickrichtung des Nutzers anzugeben. Jedes der Augen 112, 112' des Nutzers umfasst eine Pupille 114, 114', eine die Pupille 114, 114' jeweils umgebende Iris 116, 116' und einen die Iris 116, 116' jeweils umgebenden weißen Bereich 118, 118'. Hierbei wird ein Weiß-zu-weiß Abstand 120, 120' als gemeinsamer Durchmesser eines von der Hornhaut (Cornea) geschützten transparenten Bereichs des jeweiligen Auges 112, 112', der jeweils die Pupille 114, 114' und die Iris 116, 116' umfasst, angegeben. Alternativ oder zusätzlich wird ein horizontaler Abstand 122, 122' von einem rechten Augenwinkel 124, 124' zu einem linkem Augenwinkel 126, 126' jedes Auges 112, 112' oder ein vertikaler Abstand 128, 128' zwischen einem Oberlid 130, 130' und einem Unterlid 132, 132' messtechnisch erfasst. Weiterhin zeigt die Augenpartie 110 des Nutzers rechts vom rechten Auge 112 und links vom linken Auge 112' jeweils eine seitliche Kopfform 134, 134' des Nutzers.

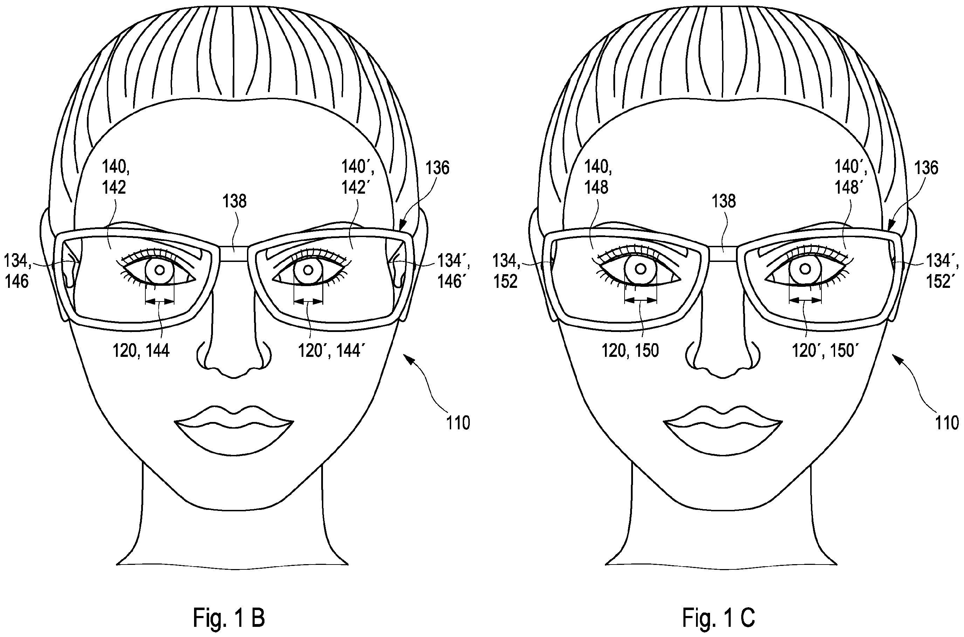

Der Nutzer in der Darstellung gemäß Figur 1A trägt keine Sehhilfe. Alternativ kann der Nutzer eine Sehhilfe tragen, welche eine Stützscheibe (hier nicht dargestellt) umfasst. Demgegenüber zeigen die Figuren 1B und 1C jeweils die Augenpartie 110 desselben Nutzers, der hier jedoch jeweils eine Brille 136 trägt. Bei der in den Figuren 1B und 1C dargestellten Brille 136 handelt es sich jeweils um eine Vollrandbrille, welche eine Brillenfassung 138 aufweist, die über zwei Aufnahmen für jeweils ein Brillenglas 140, 140' verfügt, welche die beiden Brillengläser 140, 140' jeweils umschließen. Im Rahmen der vorliegenden Erfindung kann der Nutzer alternativ jedoch auch eine Halbrandbrille (hier nicht dargestellt), in denen die beiden Brillengläser 140, 140' nur teilweise an die Brillenfassung 138 angrenzen, oder eine rahmenlose Brille (hier ebenfalls nicht dargestellt) tragen, in welcher die Brillengläser 140, 140' jeweils über eine Bohrung zur Aufnahme einer die Brillenfassung 138 verbindende Halterung verfügen. Darüber hinaus kann die Brille 136 weitere Komponenten (hier nicht dargestellt) aufweisen, insbesondere jeweils einen Brillenbügel zum Tragen der Brille 136 an jedem Ohr des Nutzers und, bevorzugt, jeweils eine Auflage (Pad) an jeder Seite einer Nase eines Nutzers. Eine Gesamtheit aus der Brillenfassung 138, den Brillenbügeln und den optional vorhandenen Pads kann gemeinsam auch als "Brillengestell" bezeichnet werden.

Aus einem Vergleich der Augenpartien 110 zwischen den Figuren 1A und 1B einerseits und den Figuren 1A und 1C andererseits ergeben sich aufgrund des jeweiligen Tragens der Brille 136 mit dioptrischer Wirkung durch den Nutzer folgenden Unterschiede, die erfindungsgemäß zur Bestimmung des mindestens eines optischen Parameters jedes der beiden Brillengläser 140, 140' herangezogen werden.

Die Brillengläser 140, 140' der in Figur 1B von dem Nutzer getragenen Brille 136 umfassen jeweils ein Brillenglas mit negativer dioptrischer Wirkung, das auch als "Minusglas" 142, 142' bezeichnet wird, und das sich aufgrund dieser Wirkung zur Korrektion einer Kurzsichtigkeit (Myopie) des Nutzers einsetzen lässt. Im Vergleich zu einer Stützscheibe weist jedes Minusglas 142, 142' eine erhöhe Dicke am Glasrand auf, während die Dicke jedes Minusglases 142, 142' in der Glasmitte verringert ist. In der Darstellung gemäß Figur 1B wird angenommen, dass die beiden Minusgläser 142, 142' dieselbe dioptrische Wirkung aufweisen. Grundsätzlich ist jedoch ein Unterschied in der dioptrischen Wirkung zwischen den beiden Minusgläsern 142, 142' denkbar und könnte in analoger Weise zu der nachfolgenden Beschreibung zu der erfindungsgemäßen Bestimmung des mindestens eines optischen Parameters für jedes Minusgläser 142, 142' herangezogen werden.

Aufgrund der dioptrischen Wirkung und unter Berücksichtigung des Vorzeichen ihres Scheitelbrechwertes bewirken die Minusgläser 142, 142' bei einem Blick von vom durch das jeweilige Minusglas 142, 142' hindurch auf das betreffende Auge 112, 112' des Nutzers, dass ein durch die Minusgläser 142, 142' sichtbarer Bereich der Augenpartie 110 des Nutzers verkleinert dargestellt wird. Wie oben bereits ausgeführt, hängt gemäß Gleichung (1) eine Größe einer beobachtbaren Veränderung $V_E$ des sichtbaren Bereichs der Augenpartie 110 des Nutzers hierbei von einer Größe eines Scheitelbrechwerts S' der Minusgläser 142, 142' ab:

$$V_E = \frac{1}{1-\frac{d}{n}D_1} \cdot \frac{1}{1-((e+e')S')}, \qquad (1)$$

wobei hier $d$ = 0,0005 m, die Brechzahl $n$ = 1,5 oder 1,52 oder 1,6 oder 1,67 oder 1,74 oder eine Kombination hiervon, $e$ = 0,012 m und $e'$ = 0,013348 m sind. In erster Näherung entspricht D1 hierbei dem Scheitelbrechwert S' bei planaren Brillengläsern (Planogläsern).

Die beobachtbare Veränderung $V_E$ des sichtbaren Bereichs der Augenpartie 110 des Nutzers kann eine Verringerung 144 des Weiß-zu-weiß Abstandes 120, 120' bewirken, die sich auf einfache Weise messtechnisch erfassen lässt. Beispielsweise kann sich der Weiß-zu-weiß Abstand 120, 120' von 0,52 mm in der Ausführung gemäß Figur 1A um etwa 5 % auf 0,47 mm in der Ausführung gemäß Figur 1B verringern. Andere Messwerte sind jedoch möglich. Für einen möglichst genauen Nachweis des Weiß-zu-weiß Abstandes 120, 120' lassen sich Algorithmen einsetzen, insbesondere Pixelmatching, maschinelles Lernen, neuronale Netzwerke, oder eine Anpassung von Parametern an eine vorgegebene Funktion (Fits). Alternativ oder zusätzlich kann auch die Verringerung 144 des horizontalen Abstands 122, 122' von dem rechten Augenwinkel 124, 124' zu dem linkem Augenwinkel 126, 126' jedes Auges 112, 112' oder des vertikalen Abstands 128, 128' zwischen dem Oberlid 130, 130' und dem Unterlid 132, 132' messtechnisch erfasst werden (hier nicht dargestellt), um auf diese Weise die beobachtbare Veränderung $V_E$ des sichtbaren Bereichs der Augenpartie 110 des Nutzers zu ermitteln.

Gemäß Gleichung (1) ist die in Figur 1B beobachtbare Veränderung $V_E$ des sichtbaren Bereichs der Augenpartie 110 des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie 110 des Nutzers, bevorzugt aus der Verringerung 144 des Weiß-zu-weiß Abstandes 120, 120', kann somit mittels einer bekannten Kalibrierung auf Vorzeichen und Größe des Scheitelbrechwerts S' des jeweiligen Brillenglases 140, 140' geschlossen werden.

Gemäß einem weiteren, von der vorliegenden Erfindung nicht umfassten Vorgehen kann alternativ oder zusätzlich auf ein sphärisches Äquivalent der Fernkorrektion des Auges 112, 112' des Nutzers geschlossen werden, indem eine Änderung 146 der seitlichen Kopfform 134, 134' des Nutzers messtechnisch erfasst wird. Bei der Verwendung von Minusgläsern 142, 142' in der Ausführung gemäß Figur 1B zeigt die Änderung 146 einen konkaven seitlichen Versatz der seitlichen Kopfform 134, 134' in Richtung des betreffenden Auges 112, 112' hin. Für einen möglichst genauen Nachweis der Änderung 146 der seitlichen Kopfform 134, 134' lassen sich auch hier bekannte Algorithmen einsetzen, insbesondere Pixelmatching, maschinelles Lernen, neuronale Netzwerke, oder eine Anpassung von Parametern an eine vorgegebene Funktion (Fits). Auch hierbei ist die in Figur 1B beobachtbare Änderung 146 der seitlichen Kopfform 134, 134' nicht nur abhängig vom Vorzeichen, sondern auch von der Größe des Scheitelbrechwerts S'. Aus der Ermittlung der beobachtbaren Änderung 146 der seitlichen Kopfform 134, 134' kann somit mittels einer bekannten Kalibrierung ebenfalls auf Vorzeichen und Größe des Scheitelbrechwerts S' des jeweiligen Brillenglases 140, 140' geschlossen werden.

Im Unterschied zu der Ausführung gemäß Figur 1B umfassen die Brillengläser 140, 140' der in Figur 1C von dem Nutzer getragenen Brille 136 jeweils ein Brillenglas mit positiver optischer Wirkung, das auch als "Plusglas" 148, 148' bezeichnet wird, und das sich aufgrund dieser Wirkung zur Korrektion einer Weitsichtigkeit (Hyperopie) des Nutzers einsetzen lässt. Im Vergleich zu einer Stützscheibe weist jedes Plusglas 148, 148' eine verringerte Dicke am Glasrand auf, während die Dicke jedes Plusglases 148, 148' in der Glasmitte erhöht ist. In der Darstellung gemäß Figur 1C wird ebenfalls angenommen, dass die beiden Plusgläser 148, 148' dieselbe dioptrische Wirkung aufweisen. Grundsätzlich ist jedoch ein Unterschied in der dioptrischen Wirkung zwischen den beiden Plusgläsern 148, 148' denkbar und könnte in analoger Weise zu der nachfolgenden Beschreibung zu der erfindungsgemäßen Bestimmung des mindestens eines optischen Parameters für jedes der Plusgläser 148, 148' herangezogen werden.

Aufgrund der dioptrischen Wirkung und unter Berücksichtigung des Vorzeichen ihres Scheitelbrechwertes bewirken die Plusgläser 148, 148' bei einem Blick von vorn durch das jeweilige Plusglas 148, 148' hindurch auf das betreffende Auge 112, 112' des Nutzers, dass ein durch die Plusgläser 148, 148' sichtbarer Bereich der Augenpartie 110 des Nutzers vergrößert dargestellt wird. Wie oben bereits ausgeführt, hängt gemäß Gleichung (1) eine Größe einer beobachtbaren Veränderung $V_E$ des sichtbaren Bereichs der Augenpartie 110 des Nutzers hierbei von einer Größe eines Scheitelbrechwerts S' der Plusgläser 148, 148' ab:

$$V_E = \frac{1}{1-\frac{d}{n}D_1} \cdot \frac{1}{1-((e+e')S')}, \qquad (1)$$

wobei hier $d$ = 0,001 m, die Brechzahl $n$ = 1,5 oder 1,52 oder 1,6 oder 1,67 oder 1,74 oder eine Kombination hiervon, $e$ = 0,012 m und $e'$ = 0,013348 m sind. In erster Näherung entspricht D1 hierbei dem Scheitelbrechwert S' bei planaren Brillengläsern (Planogläsern).

Die beobachtbare Veränderung $V_E$ des sichtbaren Bereichs der Augenpartie 110 des Nutzers bewirkt eine Erhöhung 150 des Weiß-zu-weiß Abstandes 120, 120', die sich auf einfache Weise messtechnisch erfassen lässt. Beispielsweise kann sich der Weiß-zu-weiß Abstand 120, 120' von 0,52 mm in der Ausführung gemäß Figur 1A um etwa 5 % auf 0,57 mm in der Ausführung gemäß Figur 1C vergrößern. Andere Messwerte sind jedoch möglich. Alternativ oder zusätzlich wird die Vergrößerung 150 des horizontalen Abstands 122, 122' von dem rechten Augenwinkel 124, 124' zu dem linkem Augenwinkel 126, 126' jedes Auges 112, 112' oder des vertikalen Abstands 128, 128' zwischen dem Oberlid 130, 130' und dem Unterlid 132, 132' messtechnisch erfasst (hier nicht dargestellt).

Gemäß Gleichung (1) ist die in Figur 1B beobachtbare Veränderung $V_E$ des sichtbaren Bereichs der Augenpartie 110 des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie 110 des Nutzers, bevorzugt aus der Vergrößerung 150 des Weiß-zu-weiß Abstandes 120, 120', kann somit mittels Kalibrierung auf Vorzeichen und Größe des Scheitelbrechwerts S' des jeweiligen Brillenglases 140, 140' geschlossen werden.

Gemäß einem weiteren, von der vorliegenden Erfindung nicht umfassten Vorgehen kann alternativ oder zusätzlich auf ein sphärisches Äquivalent der Fernkorrektion des Auges 112, 112' des Nutzers geschlossen werden, indem auch hier eine Änderung 152 der seitlichen Kopfform 134, 134' des Nutzers messtechnisch erfasst wird. Bei der Verwendung von Plusgläsern 148, 148' in der Ausführung gemäß Figur 1C zeigt die Änderung 152 einen konvexen seitlichen Versatz der seitlichen Kopfform 134, 134' nach außen weg von dem betreffenden Auge 112, 112'. Auch hierbei ist die in Figur 1C beobachtbare Änderung 152 der seitlichen Kopfform 134, 134' nicht nur abhängig vom Vorzeichen, sondern auch von der Größe des Scheitelbrechwerts S'. Aus der Ermittlung der beobachtbaren Änderung 152 der seitlichen Kopfform 134, 134' kann somit auch hier mittels Kalibrierung ebenfalls auf Vorzeichen und Größe des Scheitelbrechwerts S' des jeweiligen Brillenglases 140, 140' geschlossen werden.

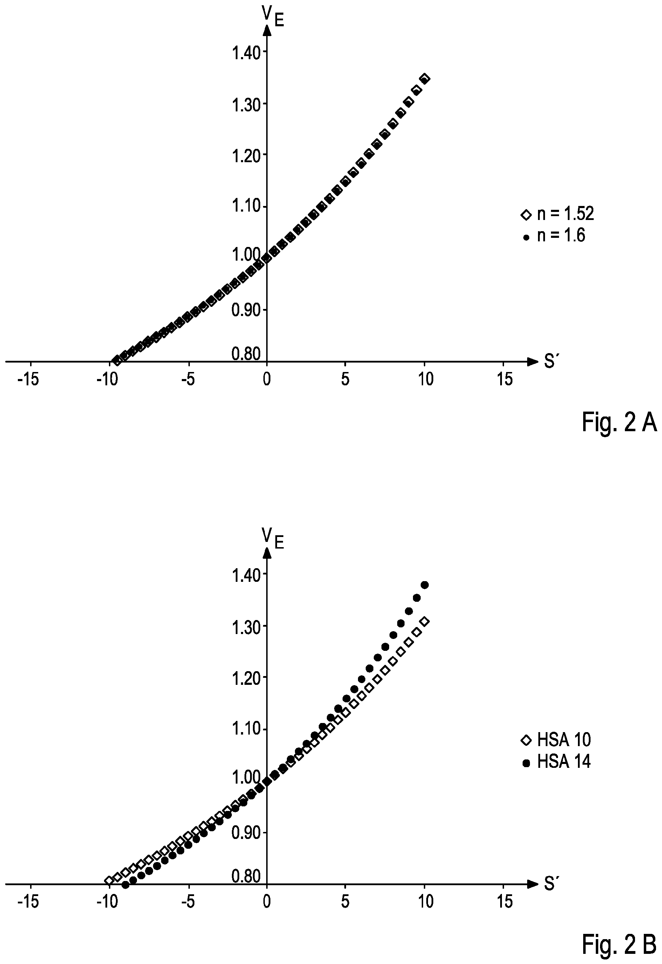

Figur 2A zeigt ein Diagramm, das einen lediglich sehr geringen Einfluss des Brillenglases 140, 140' auf die Veränderung $V_E$ belegt. Dargestellt ist hier die Veränderung $V_E$ als Funktion der Brechzahl $n$ des Materials des Brillenglases 140, 140' bei gleichem Hornhautscheitelab stand.

Figur 2B zeigt ein weiteres Diagramm, das demgegenüber einen größeren Einfluss des Brillenglases 140, 140' auf die Veränderung $V_E$ belegt. Dargestellt ist hier die Veränderung $V_E$ als Funktion des Hornhautscheitelabstands (HSA) bei gleicher Brechzahl $n$ des Materials des Brillenglases 140, 140'.

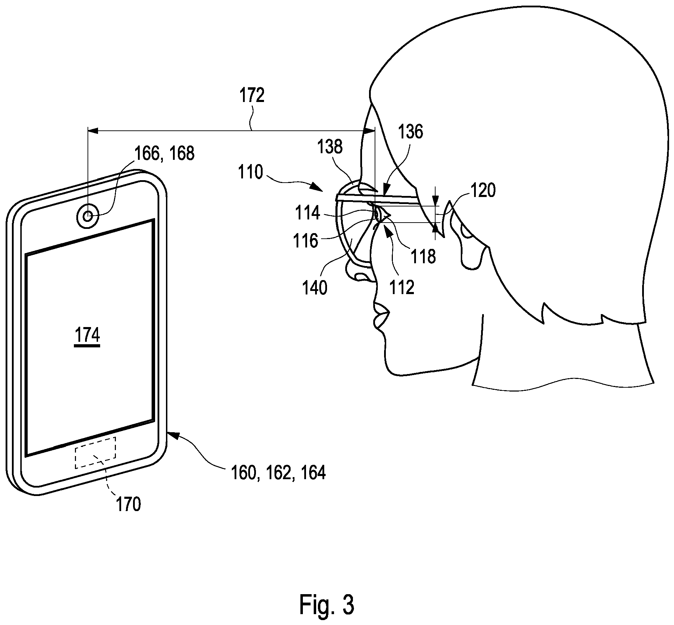

Figur 3 zeigt schematisch ein bevorzugtes Ausführungsbeispiels des erfindungsgemäßen Verfahrens und der zugehörigen Vorrichtung 160 zur Bestimmung des mindestens eines optischen Parameters des Brillenglases 140. Die Vorrichtung 160 ist in der Darstellung gemäß Figur 3 - jedoch ohne Beschränkung der Allgemeinheit - als mobiles Kommunikationsgerät 162 in Form eines Smartphones 164 ausgeführt. Eine Ausführung der Vorrichtung 160 in Form eines anderen mobilen Kommunikationsgeräts 162, insbesondere als Mobiltelefon (Handy) oder Tablet, oder in Form einer anderen Einrichtung ist jedoch ebenfalls denkbar.

Die Vorrichtung 160 umfasst eine Kamera 166, wobei es sich bei der Kamera 166 bevorzugt um eine Frontkamera 168 des Smartphones 118 handeln kann. Erfindungsgemäß ist die Kamera 162 zur Aufnahme eines Bildes eingerichtet, wobei das Bild eine die Augen 112 einschließende Augenpartie 110 und/oder eine an die Augen 112 angrenzende Gesichtspartie 110 eines Nutzers des Brillenglases 140 umfasst.

Die Vorrichtung 110 umfasst weiterhin eine Auswerteeinheit 170, die zur Bestimmung des mindestens einen optischen Parameters des Brillenglases 140 mittels Bildverarbeitung des Bildes eingerichtet ist. In einer besonders bevorzugten Ausgestaltung kann die Auswerteeinheit 170 weiterhin eine Einrichtung zur Erfassung eines Abstands des Auges 112 des Nutzers von der Kamera 166 aufweisen. Hierzu kann durch die Bildverarbeitung des Bildes, das die Kamera 166 insbesondere von der Augenpartie 110 des Nutzers aufgenommen hat, mittels einer Bestimmung eines Abstandes zwischen der Kamera 166 und dem Auge 112 des Nutzers, die auch als "Pupillendistanz" 172 bezeichnet wird, eine Ermittlung eines Absolutwertes für den Weiß-zu-weiß Abstand 120 des Auges 112 des Nutzers erfolgen. In einer alternativen Ausgestaltung (nicht dargestellt) können mindestens zwei Kameras vorgesehen sein, die gemeinsam in Form einer Stereokamera angeordnet sind und daher zur Erfassung der Pupillendistanz 172 eingerichtet sind. Alternativ oder zusätzlich kann die Vorrichtung 160 über einen gesonderten Entfernungsmesser (nicht dargestellt) verfügen, der zur Bestimmung der Pupillendistanz 172 eingerichtet ist. Zusätzlich kann die Vorrichtung 160 weitere Bestandteile aufweisen, insbesondere einen Bildschirm 174 zur Anzeige von Ergebnissen und/oder Anforderungen an den Nutzer.

Gemäß dem vorliegenden Verfahren zur Bestimmung des mindestens eines optischen Parameters des Brillenglases 140 erfolgt gemäß Schritt a) das Aufnehmen eines Bildes, das eine die Augen 112 einschließende Augenpartie 110 eines Nutzers umfasst, wobei der Nutzer, wie in Figur 3 schematisch dargestellt, vorzugsweise die das Brillenglas 140 umfassende Brille 136 trägt. Gemäß Schritt b) erfolgt ein Ermitteln mindestens eines optischen Parameters des Brillenglases 140 mittels Bildverarbeitung des während Schritt a) aufgenommen Bildes, wobei vorzugsweise die oben in der Beschreibung zu den Figuren 1A bis 1C dargestellte Vorgehensweise eingesetzt wird.

Bezugszeichenliste

| | |
|---|---|
| 110 | Augenpartie |
| 112, 112' | Auge |
| 114, 114' | Pupille |
| 116, 116' | Iris |
| 118, 118' | weißer Bereich |
| 120, 120' | Weiß-zu-weiß Abstand |
| 122, 122' | horizontaler Abstand |
| 124, 124' | rechter Augenwinkel |
| 126, 126' | linker Augenwinkel |
| 128, 128' | vertikaler Abstand |
| 130, 130' | Oberlid |
| 132, 132' | Unterlid |
| 134, 134' | seitliche Kopfform |
| 136 | Brille |
| 138 | Brillenfassung |
| 140, 140' | Brillenglas |
| 142, 142' | Minusglas |
| 144 | Verringerung |
| 146 | (konkave) Veränderung |
| 148, 148' | Plusglas |
| 150 | Vergrößerung |
| 152 | (konvexe) Veränderung |
| 160 | Vorrichtung zur Bestimmung des mindestens eines optischen Parameters eines Brillenglases |
| 162 | mobiles Kommunikationsgerät |
| 164 | Smartphone |
| 166 | Kamera |
| 168 | Frontkamera |
| 170 | Auswerteeinheit |
| 172 | Pupillendistanz |
| 174 | Bildschirm |

**Patentansprüche**

1. Verfahren zur Bestimmung mindestens eines optischen Parameters eines Brillenglases (140, 140'), wobei der optische Parameter einen Wert für eine Eigenschaft des Brillenglases (140, 140') bezeichnet, der bei der Herstellung des Brillenglases (140, 140') eingestellt wird, um eine angestrebte Korrektur von Fehlsichtigkeiten von wenigstens einem Auge (112, 112') eines Nutzers des Brillenglases (140, 140') zu erzielen, wobei das Verfahren folgende Schritte umfasst:

a) Aufnehmen mindestens eines Bildes unter Verwendung eines Brillenglases (140, 140'), wobei das mindestens eine Bild eine wenigstens ein Auge (112, 112') einschließende Augenpartie (110, 110') eines Nutzers des Brillenglases (140, 140') umfasst, wobei durch das Aufnehmen des mindestens einen Bildes unter Verwendung des Brillenglases (140, 140') eine Veränderung (144, 150) eines durch das Brillenglas (140, 140') sichtbaren Bereichs der Augenpartie (110) des Nutzers des Brillenglases (140, 140') erfolgt; und

b) Ermitteln mindestens eines optischen Parameters des Brillenglases (140, 140') mittels Bildverarbeitung des Bildes,

**dadurch gekennzeichnet,**

**dass** der mindestens eine optische Parameter des Brillenglases (140, 140') anhand der Veränderung $V_E$ des sichtbaren Bereichs der Augenpartie (110) des Nutzers gemäß Gleichung (1) ermittelt wird:

$$V_E = \frac{1}{1-\frac{d}{n}D_1} \cdot \frac{1}{1-((e+e')S')}, \qquad (1)$$

wobei für $d$ = 0,0005 m bei dem Minusglas (142, 142') und $d$ = 0,001 m bei dem Plusglas (148, 148'), $n$ eine Brechzahl eines Materials des Brillenglases (140, 140') von 1,5 oder 1,52 oder 1,6 oder 1,67 oder 1,74 oder eine Kombination hiervon, $e$ = 0,012 m und $e'$ = 0,013348 m verwendet werden, und wobei $S'$ dem Scheitelbrechwert des Brillenglases (140, 140') und $D_1$ dem Brechwert der vorderen Linsenfläche des Brillenglases (140, 140') entspricht, wobei die Veränderung $V_E$ eine geometrische Abmessung des wenigstens einen Auges (112, 112') betrifft, wobei die geometrische Abmessung des wenigstens einen Auges (112, 112') ausgewählt wird aus:

- einem gemeinsamen Durchmesser von Pupille (114, 114') und Iris (116, 116');
- einem horizontalen Abstand (122, 122') zwischen einem rechten Augenwinkel (124, 124') und einem linken Augenwinkel (126, 126'); oder
- einem vertikalen Abstand (128, 128') zwischen einem Oberlid (134, 134') und einem Unterlid (132, 132').

2. Verfahren nach dem vorangehenden Anspruch, **dadurch gekennzeichnet, dass** ein Scheitelbrechwert als der optische Parameter ermittelt wird.

3. Verfahren nach einem der vorangehenden Ansprüche, **dadurch gekennzeichnet, dass** der gemeinsame Durchmesser von Pupille (114, 114') und Iris (116, 116') des wenigstens einen Auges (112, 112') ausgewählt wird aus einem Weiß-zu-weiß Abstand (120, 120') im Auge (112, 112').

4. Verfahren nach einem der vorangehenden Ansprüche, **dadurch gekennzeichnet, dass** zur Bestimmung der Veränderung (144, 150) zusätzlich mindestens ein weiteres Bild ohne Verwendung des Brillenglases (140, 140') als Vergleichsbild aufgenommen wird oder dass auf ein bereits vorhandenes Vergleichsbild oder auf bereits vorhandene geometrische Abmessungen des mindestens einen Auges (112, 112') des Nutzers zurückgegriffen wird.

5. Computerprogramm zur Bestimmung mindestens eines optischen Parameters eines Brillenglases, wobei der optische Parameter einen Wert für eine Eigenschaft des Brillenglases (140, 140') bezeichnet, der bei der Herstellung des Brillenglases (140, 140') eingestellt wird, um eine angestrebte Korrektur von Fehlsichtigkeiten mindestens eines Auges (112, 112') eines Nutzers des Brillenglases (140, 140') zu erzielen, wobei das Computerprogramm dazu eingerichtet ist, die folgenden Verfahrensschritte durchzuführen:

a) Aufnehmen mindestens eines Bildes unter Verwendung eines Brillenglases (140, 140'), wobei das mindestens eine Bild eine die mindestens ein Auge (112, 112') einschließende Augenpartie (110, 110')eines Nutzers des Brillenglases (140, 140') umfasst, wobei durch das Aufnehmen des mindestens einen Bildes unter Verwendung des Brillenglases (140, 140') eine Veränderung (144, 150) eines durch das Brillenglas (140, 140') sichtbaren Bereichs der Augenpartie (110) des Nutzers des Brillenglases (140, 140') erfolgt; und

b) Ermitteln mindestens eines optischen Parameters des Brillenglases (140, 140') mittels Bildverarbeitung des mindestens einen Bildes,

**dadurch gekennzeichnet,**

**dass** der mindestens eine optische Parameter des Brillenglases (140, 140') anhand der Veränderung $V_E$ des sichtbaren Bereichs der Augenpartie (110) des Nutzers gemäß Gleichung (1) ermittelt wird:

$$V_E = \frac{1}{1 - \frac{d}{n} D_1} \cdot \frac{1}{1 - ((e + e')S')}, \qquad (1)$$

wobei für $d$ = 0,0005 m bei dem Minusglas (142, 142') und $d$ = 0,001 m bei dem Plusglas (148, 148'), $n$ eine Brechzahl eines Materials des Brillenglases (140, 140') von 1,5 oder 1,52 oder 1,6 oder 1,67 oder 1,74 oder eine Kombination hiervon, $e$ = 0,012 m und $e'$ = 0,013348 m verwendet werden, und wobei S' dem Scheitelbrechwert des Brillenglases (140, 140') und $D_1$ dem Brechwert der vorderen Linsenfläche des Brillenglases (140, 140') entspricht, wobei die Veränderung $V_E$ eine geometrische Abmessung des wenigstens einen Auges (112, 112') betrifft, wobei die geometrische Abmessung des wenigstens einen Auges (112, 112') ausgewählt wird aus:

- einem gemeinsamen Durchmesser von Pupille (114, 114') und Iris (116, 116');
- einem horizontalen Abstand (122, 122') zwischen einem rechten Augenwinkel (124, 124') und einem linken Augenwinkel (126, 126'); oder
- einem vertikalen Abstand (128, 128') zwischen einem Oberlid (134, 134') und einem Unterlid (132, 132').

6.  Verfahren zur Herstellung mindestens eines Brillenglases (140, 140'), wobei die Herstellung des Brillenglases (140, 140') durch Bearbeitung eines Linsenrohlings oder Brillenglas-Halbfertigprodukts erfolgt, wobei der Linsenrohling oder das Brillenglas-Halbfertigprodukt anhand von Refraktionsdaten und optional Zentrierdaten bearbeitet wird, wobei eine Festlegung der Refraktionsdaten die folgenden Schritte umfasst:

    a) Aufnehmen mindestens eines Bildes unter Verwendung eines Brillenglases (140, 140'), wobei das Bild eine mindestens ein Auge (112, 112') einschließende Augenpartie (110, 110')eines Nutzers des Brillenglases (140, 140') umfasst wobei durch das Aufnehmen des mindestens einen Bildes unter Verwendung des Brillenglases (140, 140') eine Veränderung (144, 150) eines durch das Brillenglas (140, 140') sichtbaren Bereichs der Augenpartie (110) des Nutzers des Brillenglases (140, 140') erfolgt; und
    b) Ermitteln mindestens eines optischen Parameters des Brillenglases (140, 140') mittels Bildverarbeitung des mindestens einen Bildes, wobei der optische Parameter einen Wert für eine Eigenschaft des Brillenglases (140, 140') bezeichnet, der bei der Herstellung des Brillenglases (140, 140') eingestellt wird, um eine angestrebte Korrektion von Fehlsichtigkeiten des mindestens einen Auges (112, 112') eines Nutzers des Brillenglases (140, 140') zu erzielen,

    **dadurch gekennzeichnet,**

    **dass** der mindestens eine optische Parameter des Brillenglases (140, 140') anhand der Veränderung $V_E$ des sichtbaren Bereichs der Augenpartie (110) des Nutzers gemäß Gleichung (1) ermittelt wird:

$$V_E = \frac{1}{1 - \frac{d}{n} D_1} \cdot \frac{1}{1 - ((e + e')S')}, \qquad (1)$$

    wobei für $d$ = 0,0005 m bei dem Minusglas (142, 142') und $d$ = 0,001 m bei dem Plusglas (148, 148'), $n$ eine Brechzahl eines Materials des Brillenglases (140, 140') von 1,5 oder 1,52 oder 1,6 oder 1,67 oder 1,74 oder eine Kombination hiervon, $e$ = 0,012 m und $e'$ = 0,013348 m verwendet werden, und wobei S' dem Scheitelbrechwert des Brillenglases (140, 140') und $D_1$ dem Brechwert der vorderen Linsenfläche des Brillenglases (140, 140') entspricht, wobei die Veränderung $V_E$ eine geometrische Abmessung des wenigstens einen Auges (112, 112') betrifft, wobei die geometrische Abmessung des wenigstens einen Auges (112, 112') ausgewählt wird aus:

    - einem gemeinsamen Durchmesser von Pupille (114, 114') und Iris (116, 116');
    - einem horizontalen Abstand (122, 122') zwischen einem rechten Augenwinkel (124, 124') und einem linken Augenwinkel (126, 126'); oder
    - einem vertikalen Abstand (128, 128') zwischen einem Oberlid (134, 134') und einem Unterlid (132, 132').

7.  Vorrichtung (160) zur Bestimmung mindestens eines optischen Parameters eines Brillenglases (140, 140'), wobei der optische Parameter einen Wert für eine Eigenschaft des Brillenglases (140, 140') bezeichnet, der bei der Herstellung des Brillenglases (140, 140') eingestellt wird, um eine angestrebte Korrektion von Fehlsichtigkeiten von mindestens einem Auge (112, 112') eines Nutzers des Brillenglases (140, 140') zu erzielen, wobei die Vorrichtung (160) umfasst:

- wenigstens eine Kamera (166), die zur Aufnahme mindestens eines Bildes unter Verwendung eines Brillenglases (140, 140') eingerichtet ist, wobei die wenigstens eine Kamera (166) dazu eingerichtet ist, die Aufnahme des mindestens einen Bildes derart vorzunehmen, dass das mindestens eine Bild eine mindestens ein Auge (112, 112') einschließende Augenpartie (110, 110')eines Nutzers des Brillenglases (140, 140') umfasst, wobei durch das Aufnehmen des mindestens einen Bildes unter Verwendung des Brillenglases (140, 140') eine Veränderung (144, 150) eines durch das Brillenglas (140, 140') sichtbaren Bereichs der Augenpartie (110) des Nutzers des Brillenglases (140, 140') erfolgt; und
- eine Auswerteeinheit (170), die zur Bestimmung mindestens eines optischen Parameters des Brillenglases (140, 140') mittels Bildverarbeitung des mindestens einen Bildes eingerichtet ist,

**dadurch gekennzeichnet,**

**dass** die wenigstens eine Kamera (166) dazu eingerichtet ist, dass der mindestens eine optische Parameter des Brillenglases (140, 140') anhand der Veränderung $V_E$ des sichtbaren Bereichs der Augenpartie (110) des Nutzers gemäß Gleichung (1) ermittelt wird:

$$V_E = \frac{1}{1-\frac{d}{n}D_1} \cdot \frac{1}{1-((e+e')S')}, \qquad (1)$$

wobei für $d$ = 0,0005 m bei dem Minusglas (142, 142') und $d$ = 0,001 m bei dem Plusglas (148, 148'), $n$ eine Brechzahl eines Materials des Brillenglases (140, 140') von 1,5 oder 1,52 oder 1,6 oder 1,67 oder 1,74 oder eine Kombination hiervon, $e$ = 0,012 m und $e'$ = 0,013348 m verwendet werden, und wobei S' dem Scheitelbrechwert des Brillenglases (140, 140') und $D_1$ dem Brechwert der vorderen Linsenfläche des Brillenglases (140, 140') entspricht, wobei die Veränderung $V_E$ eine geometrische Abmessung des wenigstens einen Auges (112, 112') betrifft, wobei die geometrische Abmessung des wenigstens einen Auges (112, 112') ausgewählt wird aus:

- einem gemeinsamen Durchmesser von Pupille (114, 114') und Iris (116, 116');
- einem horizontalen Abstand (122, 122') zwischen einem rechten Augenwinkel (124, 124') und einem linken Augenwinkel (126, 126'); oder
- einem vertikalen Abstand (128, 128') zwischen einem Oberlid (134, 134') und einem Unterlid (132, 132').

8. Vorrichtung (110) nach dem vorangehenden Anspruch, **dadurch gekennzeichnet, dass** die Vorrichtung (160) weiterhin dazu eingerichtet ist, einen Abstand zwischen der Vorrichtung (160) und mindestens einem Auge (112, 112') des Nutzers zu bestimmen.

9. Verfahren zur Bestimmung mindestens eines optischen Parameters eines Brillenglases (140, 140'), wobei der optische Parameter einen Wert für eine Eigenschaft des Brillenglases (140, 140') bezeichnet, der bei der Herstellung des Brillenglases (140, 140') eingestellt wird, um eine angestrebte Korrektur von Fehlsichtigkeiten von mindestens einem Auge (112, 112') eines Nutzers des Brillenglases (140, 140') zu erzielen, wobei das Verfahren folgende Schritte umfasst:

a) Aufnehmen mindestens eines Bildes unter Verwendung eines Brillenglases (140, 140'), wobei das mindestens eine Bild eine mindestens ein Auge (112, 112') einschließende Augenpartie (110, 110') und/oder eine an mindestens ein Auge (112, 112') angrenzende Gesichtspartie eines Nutzers des Brillenglases (140, 140') umfasst, wobei durch das Aufnehmen des mindestens einen Bildes unter Verwendung des Brillenglases (140, 140') eine Veränderung (144, 146, 150, 152) eines durch das Brillenglas (140, 140') sichtbaren Bereichs der Augenpartie (110) und/oder der an das wenigstens eine Auge (112, 112') angrenzenden Gesichtspartie des Nutzers des Brillenglases (140, 140') erfolgt; und
b) Ermitteln mindestens eines optischen Parameters des Brillenglases (140, 140') mittels Bildverarbeitung des mindestens einen Bildes,

**dadurch gekennzeichnet,**

zur Bestimmung der Veränderung (144, 146, 150, 152) zusätzlich mindestens ein weiteres Bild ohne Verwendung des Brillenglases (140, 140') als Vergleichsbild aufgenommen wird oder dass auf ein bereits vorhandenes Vergleichsbild zurückgegriffen wird, wobei das Ermitteln des mindestens eines optischen Parameters des Brillenglases (140, 140') mittels Bildverarbeitung eines bewegten Musters erfolgt, wobei das bewegte Muster aus dem mindestens einen Bild unter Verwendung eines Brillenglases (140, 140') und dem mindestens einen Vergleichsbild zusammengesetzt wird,

wobei die Bildverarbeitung mindestens einen Algorithmus der Bildanalyse umfasst, wobei zur Bildanalyse mindestens ein Bildstatistikparameter verwendet wird,

wobei der mindestens eine Bildstatistikparameter ausgewählt ist aus

- einer Orientierung mindestens einen ausgewählten Bereichs in dem mindestens einen Bild, insbesondere einer Kante in dem mindestens einen Bild;
- einer Grauwertverteilung in dem mindestens einen Bild oder mindestens einem ausgewählten Bereich hiervon;
- einem optischen Fluss des bewegten Musters in Richtung und Ausprägung;
- einer lokalen und globalen Änderung des bewegten Musters; und/oder
- einer Verteilung von Ortsfrequenzen mittels Fourier-Transformation,

wobei das Ermitteln des mindestens eines optischen Parameters des Brillenglases (140, 140') mittels einer Klassifikation oder einer Regression des mindestens einen Bildstatistikparameters unter Verwendung eines Verfahrens maschinellen Lernens, insbesondere mittels eines neuronalen Netzwerks, erfolgt.

10. Verfahren nach dem vorangehenden Anspruch, **dadurch gekennzeichnet, dass** vor Schritt b) ein Trainieren des neuronalen Netzwerks erfolgt, wodurch ein trainiertes neuronales Netzwerk erhalten wird.

11. Verfahren nach dem vorangehenden Anspruch, **dadurch gekennzeichnet, dass** für das Trainieren des neuronalen Netzwerks eine Vielzahl an Trainingsdatensätzen verwendet wird, wobei jeder Trainingsdatensatz ein Paar aus

- mindestens einem Bild und mindestens einem Vergleichsbild, sowie
- mindestens einem zugeordneten optischen Parameter des Brillenglases (140, 140') oder mindestens einer mit dem Brillenglas (140, 140') in Beziehung stehenden optischen Wirkung, aufweist.

**Claims**

1. Method for determining at least one optical parameter of a spectacle lens (140, 140'), wherein the optical parameter denotes a value for a property of the spectacle lens (140, 140') which is set during the production of the spectacle lens (140, 140') in order to achieve an intended correction of ametropia of at least one eye (112, 112') of a user of the spectacle lens (140, 140'), wherein the method comprises the following steps:

a) Recording at least one image using a spectacle lens (140, 140'), wherein the at least one image comprises an eye portion (110, 110') including at least one eye (112, 112') of a user of the spectacle lens (140, 140'), wherein a variation (144, 150) of a region of the eye portion (110) of the user of the spectacle lens (140, 140') that is visible through the spectacle lens (140, 140') is effected by the recording of the at least one image using the spectacle lens (140, 140'); and
b) Ascertaining at least one optical parameter of the spectacle lens (140, 140') by means of image processing of the image,

**characterized**

**in that** the at least one optical parameter of the spectacle lens (140, 140') is ascertained on the basis of the variation $V_E$ of the visible region of the eye portion (110) of the user in accordance with equation (1):

$$V_E = \frac{1}{1-\frac{d}{n}D_1} \cdot \frac{1}{1-((e+e')S')} \quad , \qquad (1)$$

wherein for $d = 0.0005$ m in the case of the negative lens (142, 142') and $d = 0.001$ m in the case of the positive lens (148, 148'), $n$ a refractive index of a material of the spectacle lens (140, 140') of 1.5 or 1.52 or 1.6 or 1.67 or 1.74 or a combination thereof, $e$ = 0.012 m and e' = 0.013348 m are used, and wherein $S'$ corresponds to the vertex power of the spectacle lens (140, 140') and $D_1$ corresponds to the power of the front lens surface of the spectacle lens (140, 140'), wherein the variation $V_E$ concerns a geometric dimension of the at least one eye (112, 112'), wherein the geometric dimension of the at least one eye (112, 112') is selected from:

- a common diameter of pupil (114, 114') and iris (116, 116');
- a horizontal distance (122, 122') between a right eye angle (124, 124') and a left eye angle (126, 126'); or
- a vertical distance (128, 128') between an upper lid (134, 134') and a lower lid (132, 132').

2. Method according to the preceding claim, **characterized in that** a vertex power is ascertained as the optical parameter.

3. Method according to any of the preceding claims, **characterized in that** the common diameter of pupil (114, 114') and iris (116, 116') of the at least one eye (112, 112') is selected from a white-to-white distance (120, 120') in the eye (112, 112').

4. Method according to any of the preceding claims, **characterized in that** for determining the variation (144, 150) additionally at least one further image is recorded as comparison image without the use of the spectacle lens (140, 140') or **in that** recourse is had to an already available comparison image or to already available geometric dimensions of the at least one eye (112, 112') of the user.

5. Computer program for determining at least one optical parameter of a spectacle lens, wherein the optical parameter denotes a value for a property of the spectacle lens (140, 140') which is set during the production of the spectacle lens (140, 140') in order to achieve an intended correction of ametropia of at least one eye (112, 112') of a user of the spectacle lens (140, 140'), wherein the computer program is configured to carry out the following method steps:

a) Recording at least one image using a spectacle lens (140, 140'), wherein the at least one image comprises an eye portion (110, 110') including the at least one eye (112, 112') of a user of the spectacle lens (140, 140'), wherein a variation (144, 150) of a region of the eye portion (110) of the user of the spectacle lens (140, 140') that is visible through the spectacle lens (140, 140') is effected by the recording of the at least one image using the spectacle lens (140, 140'); and
b) Ascertaining at least one optical parameter of the spectacle lens (140, 140') by means of image processing of the at least one image,

**characterized**

**in that** the at least one optical parameter of the spectacle lens (140, 140') is ascertained on the basis of the variation $V_E$ of the visible region of the eye portion (110) of the user in accordance with equation (1):

$$V_E = \frac{1}{1-\frac{d}{n}D_1} \cdot \frac{1}{1-((e+e')S')} \ , \qquad (1)$$

wherein for $d$ = 0.0005 m in the case of the negative lens (142, 142') and $d$ = 0.001 m in the case of the positive lens (148, 148'), $n$ a refractive index of a material of the spectacle lens (140, 140') of 1.5 or 1.52 or 1.6 or 1.67 or 1.74 or a combination thereof, $e$ = 0.012 m and e' = 0.013348 m are used, and wherein $S'$ corresponds to the vertex power of the spectacle lens (140, 140') and $D_1$ corresponds to the power of the front lens surface of the spectacle lens (140, 140'), wherein the variation $V_E$ concerns a geometric dimension of the at least one eye (112, 112'), wherein the geometric dimension of the at least one eye (112, 112') is selected from:

- a common diameter of pupil (114, 114') and iris (116, 116');
- a horizontal distance (122, 122') between a right eye angle (124, 124') and a left eye angle (126, 126'); or
- a vertical distance (128, 128') between an upper lid (134, 134') and a lower lid (132, 132').

6. Method for producing at least one spectacle lens (140, 140'), wherein the spectacle lens (140, 140') is produced by processing a lens blank or spectacle lens semifinished product, wherein the lens blank or the spectacle lens semifinished product is processed on the basis of refraction data and optionally centration data, wherein a definition of the refraction data comprises the following steps:

a) Recording at least one image using a spectacle lens (140, 140'), wherein the image comprises an eye portion (110, 110') including at least one eye (112, 112') of a user of the spectacle lens (140, 140'), wherein a variation (144, 150) of a region of the eye portion (110) of the user of the spectacle lens (140, 140') that is visible through the spectacle lens (140, 140') is effected by the recording of the at least one image using the spectacle lens (140, 140'); and

b) Ascertaining at least one optical parameter of the spectacle lens (140, 140') by means of image processing of the at least one image, wherein the optical parameter denotes a value for a property of the spectacle lens (140, 140') which is set during the production of the spectacle lens (140, 140') in order to achieve an intended correction of ametropia of the at least one eye (112, 112') of a user of the spectacle lens (140, 140'),

**characterized**

**in that** the at least one optical parameter of the spectacle lens (140, 140') is ascertained on the basis of the variation $V_E$ of the visible region of the eye portion (110) of the user in accordance with equation (1):

$$V_E = \frac{1}{1-\frac{d}{n}D_1} \cdot \frac{1}{1-((e+e')S')} \quad , \tag{1}$$

wherein for $d$ = 0.0005 m in the case of the negative lens (142, 142') and $d$ = 0.001 m in the case of the positive lens (148, 148'), $n$ a refractive index of a material of the spectacle lens (140, 140') of 1.5 or 1.52 or 1.6 or 1.67 or 1.74 or a combination thereof, $e$ = 0.012 m and e' = 0.013348 m are used, and wherein $S'$ corresponds to the vertex power of the spectacle lens (140, 140') and $D_1$ corresponds to the power of the front lens surface of the spectacle lens (140, 140'), wherein the variation $V_E$ concerns a geometric dimension of the at least one eye (112, 112'), wherein the geometric dimension of the at least one eye (112, 112') is selected from:

- a common diameter of pupil (114, 114') and iris (116, 116');
- a horizontal distance (122, 122') between a right eye angle (124, 124') and a left eye angle (126, 126'); or
- a vertical distance (128, 128') between an upper lid (134, 134') and a lower lid (132, 132').

7. Apparatus (160) for determining at least one optical parameter of a spectacle lens (140, 140'), wherein the optical parameter denotes a value for a property of the spectacle lens (140, 140') which is set during the production of the spectacle lens (140, 140') in order to achieve an intended correction of ametropia of at least one eye (112, 112') of a user of the spectacle lens (140, 140'), wherein the apparatus (160) comprises:

- at least one camera (166) configured for recording at least one image using a spectacle lens (140, 140'), wherein the at least one camera (166) is configured to carry out the recording of the at least one image in such a way that the at least one image comprises an eye portion (110, 110') including at least one eye (112, 112') of a user of the spectacle lens (140, 140'), wherein a variation (144, 150) of a region of the eye portion (110) of the user of the spectacle lens (140, 140') that is visible through the spectacle lens (140, 140') is effected by the recording of the at least one image using the spectacle lens (140, 140'); and
- an evaluation unit (170) configuring for determining at least one optical parameter of the spectacle lens (140, 140') by means of image processing of the at least one image,

**characterized**

**in that** the at least one camera (166) is configured to the effect that the at least one optical parameter of the spectacle lens (140, 140') is ascertained on the basis of the variation $V_E$ of the visible region of the eye portion (110) of the user in accordance with equation (1):

$$V_E = \frac{1}{1-\frac{d}{n}D_1} \cdot \frac{1}{1-((e+e')S')} \quad , \tag{1}$$

wherein for d = 0.0005 m in the case of the negative lens (142, 142') and d = 0.001 m in the case of the positive lens (148, 148'), $n$ a refractive index of a material of the spectacle lens (140, 140') of 1.5 or 1.52 or 1.6 or 1.67 or 1.74 or a combination thereof, $e$ = 0.012 m and $e'$ = 0.013348 m are used, and wherein $S'$ corresponds to the vertex power of the spectacle lens (140, 140') and $D_1$ corresponds to the power of the front lens surface of the spectacle lens (140, 140'), wherein the variation $V_E$ concerns a geometric dimension of the at least one eye (112, 112'), wherein the geometric dimension of the at least one eye (112, 112') is selected from:

- a common diameter of pupil (114, 114') and iris (116, 116');
- a horizontal distance (122, 122') between a right eye angle (124, 124') and a left eye angle (126, 126'); or
- a vertical distance (128, 128') between an upper lid (134, 134') and a lower lid (132, 132').

8. Apparatus (110) according to the preceding claim, **characterized in that** the apparatus (160) is furthermore configured to determine a distance between the apparatus (160) and at least one eye (112, 112') of the user.

9. Method for determining at least one optical parameter of a spectacle lens (140, 140'), wherein the optical parameter denotes a value for a property of the spectacle lens (140, 140') which is set during the production of the spectacle lens (140, 140') in order to achieve an intended correction of ametropia of at least one eye (112, 112') of a user of the spectacle lens (140, 140'), wherein the method comprises the following steps:

a) Recording at least one image using a spectacle lens (140, 140'), wherein the at least one image comprises an eye portion (110, 110') including at least one eye (112, 112') and/or a face portion adjacent to at least one eye (112, 112') of a user of the spectacle lens (140, 140'), wherein a variation (144, 146, 150, 152) of a region of the eye portion (110) of the user that is visible through the spectacle lens (140, 140') and/or of the face portion adjacent to the at least one eye (112, 112') of the user of the spectacle lens (140, 140') is effected by the recording of the at least one image using the spectacle lens (140, 140'); and
b) Ascertaining at least one optical parameter of the spectacle lens (140, 140') by means of image processing of the at least one image,

**characterized**

for determining the variation (144, 146, 150, 152) additionally at least one further image is recorded as comparison image without the use of the spectacle lens (140, 140') or in that recourse is had to an already available comparison image, wherein ascertaining the at least one optical parameter of the spectacle lens (140, 140') is effected by means of image processing of a moving pattern, wherein the moving pattern is composed of the at least one image using a spectacle lens (140, 140') and the at least one comparison image,
wherein the image processing comprises at least one image analysis algorithm,
wherein at least one image statistical parameter is used for image analysis,
wherein the at least one image statistical parameter is selected from

- an orientation of at least one selected region in the at least one image, in particular of an edge in the at least one image;
- a grayscale value distribution in the at least one image or at least one selected region thereof;
- an optical flow of the moving pattern in terms of direction and manifestation;
- a local and global change in the moving pattern; and/or
- a distribution of spatial frequencies by means of Fourier transformation,

wherein ascertaining the at least one optical parameter of the spectacle lens (140, 140') is effected by means of a classification or a regression of the at least one image statistical parameter using a machine learning method, in particular by means of a neural network.

10. Method according to the preceding claim, **characterized in that** before step b) training of the neural network is effected, whereby a trained neural network is obtained.

11. Method according to the preceding claim, **characterized in that** a multiplicity of training data sets are used for the training of the neural network, wherein each training data set has a pair comprising

- at least one image and at least one comparison image, and
- at least one assigned optical parameter of the spectacle lens (140, 140') or at least one optical power related to the spectacle lens (140, 140').

**Revendications**

1. Procédé de détermination d'au moins un paramètre optique d'un verre de lunettes (140, 140'), le paramètre optique désignant une valeur pour une propriété du verre de lunettes (140, 140'), qui est réglée lors de la fabrication du verre de lunettes (140, 140') afin d'obtenir la correction souhaitée d'amétropies d'au moins un œil (112, 112') d'un utilisateur du verre de lunettes (140, 140'), le procédé comprenant les étapes suivantes :

   a) capturer au moins une image à l'aide d'un verre de lunettes (140, 140'), l'au moins une image comprenant une partie oculaire (110, 110'), incluant au moins un œil (112, 112'), d'un utilisateur du verre de lunettes (140, 140'), la capture de l'au moins une image à l'aide du verre de lunettes (140, 140') entraînant une modification (144, 150) d'une zone, visible à travers le verre de lunettes (140, 140'), de la partie oculaire (110) de l'utilisateur du verre de lunettes (140, 140') ; et
   b) déterminer au moins un paramètre optique du verre de lunettes (140, 140') par traitement de l'image,

   **caractérisé en ce que**

   l'au moins un paramètre optique du verre de lunettes (140, 140') est déterminé sur la base de la modification $V_E$ de la zone visible de la partie oculaire (110) de l'utilisateur selon l'équation (1) :

   $$V_E = \frac{1}{1 - \frac{d}{n} D_1} \cdot \frac{1}{1 - ((e+e')S')}, \qquad (1)$$

   lorsque $d$ = 0,0005 m pour le verre moins (142, 142') et $d$ = 0,001 m pour le verre plus (148, 148'), $n$ un indice de réfraction d'un matériau du verre de lunettes (140, 140') de 1,5 ou 1,52 ou 1,6 ou 1,67 ou 1,74 ou une combinaison de ceux-ci, $e$ = 0,012 m et $e'$ = 0,013348 m étant utilisés, et $S'$ correspondant à l'indice focométrique du verre de lunettes (140, 140') et $D_1$ correspondant au pouvoir réfringent de la surface avant du verre de lunettes (140, 140'), la modification $V_E$ concernant une dimension géométrique de l'au moins un œil (112, 112'), la dimension géométrique de l'au moins un œil (112, 112') étant sélectionnée parmi :

   - un diamètre commun de la pupille (114, 114') et de l'iris (116, 116') ;
   - une distance horizontale (122, 122') entre un coin droit (124, 124') de l'œil et un coin gauche (126, 126') de l'œil ; ou
   - une distance verticale (128, 128') entre une paupière supérieure (134, 134') et une paupière inférieure (132, 132').

2. Procédé selon la revendication précédente, **caractérisé en ce qu'**un indice focométrique est déterminé comme paramètre optique.

3. Procédé selon l'une des revendications précédentes, **caractérisé en ce que** le diamètre commun de la pupille (114, 114') et de l'iris (116, 116') de l'au moins un œil (112, 112') est choisi à partir d'une distance blanc à blanc (120, 120') dans l'œil (112, 112').

4. Procédé selon l'une des revendications précédentes, **caractérisé en ce que**, pour déterminer la modification (144, 150), au moins une autre image est capturée comme image de comparaison sans utiliser le verre de lunettes (140, 140'), ou **en ce qu'**une référence est faite à une image de comparaison déjà existante ou à des dimensions géométriques déjà existantes de l'au moins un œil (112, 112') de l'utilisateur.

5. Logiciel de détermination d'au moins un paramètre optique d'un verre de lunettes, le paramètre optique désignant une valeur pour une propriété du verre de lunettes (140, 140') qui est réglée lors de la fabrication du verre de lunettes (140, 140') afin d'obtenir une correction souhaitée d'amétropies d'au moins un œil (112, 112') d'un l'utilisateur du verre de lunettes (140, 140'), le logiciel étant conçu pour réaliser les étapes de procédé suivantes :

   a) capturer au moins une image à l'aide d'un verre de lunettes (140, 140'), l'au moins une image comprenant une partie oculaire (110, 110'), incluant au moins un œil (112, 112'), d'un utilisateur du verre de lunettes (140, 140'), la capture de l'au moins une image à l'aide du verre de lunettes (140, 140') entraînant une modification (144, 150) d'une zone, visible à travers le verre de lunettes (140, 140'), de la partie oculaire (110) de l'utilisateur du verre de lunettes (140, 140') ; et

b) déterminer au moins un paramètre optique du verre de lunettes (140, 140') par traitement de l'au moins une image,

**caractérisé en ce que**

l'au moins un paramètre optique du verre de lunettes (140, 140') est déterminé sur la base de la modification $V_E$ de la zone visible de la partie oculaire (110) de l'utilisateur selon l'équation (1) :

$$V_E = \frac{1}{1-\frac{d}{n}D_1} \cdot \frac{1}{1-((e+e')S')}, \qquad (1)$$

lorsque d = 0,0005 m pour le verre moins (142, 142') et d = 0,001 m pour le verre plus (148, 148'), $n$ un indice de réfraction d'un matériau du verre de lunettes (140, 140') de 1,5 ou 1,52 ou 1,6 ou 1,67 ou 1,74 ou une combinaison de ceux-ci, $e$ = 0,012 m et $e'$ = 0,013348 m étant utilisés, et $S'$ correspondant à l'indice focométrique du verre de lunettes (140, 140') et $D_1$ correspondant au pouvoir réfringent de la surface avant du verre de lunettes (140, 140'), la modification $V_E$ concernant une dimension géométrique de l'au moins un œil (112, 112'), la dimension géométrique de l'au moins un œil (112, 112') étant sélectionnée parmi :

- un diamètre commun de la pupille (114, 114') et de l'iris (116, 116') ;
- une distance horizontale (122, 122') entre un coin droit (124, 124') de l'œil et un coin gauche (126, 126') de l'œil ; ou
- une distance verticale (128, 128') entre une paupière supérieure (134, 134') et une paupière inférieure (132, 132').

6. Procédé de fabrication d'au moins un verre de lunettes (140, 140'), le verre de lunettes (140, 140') étant fabriqué par traitement d'une ébauche de verre ou d'un produit de verre de lunettes semi-fini, l'ébauche de verre ou le produit de verre de lunettes semi-fini étant traité(e) à l'aide de données de réfraction et éventuellement de données de centrage, une spécification des données de réfraction comprenant les étapes suivantes :

a) capturer au moins une image à l'aide d'un verre de lunettes (140, 140'), l'image comprenant une partie oculaire (110, 110'), incluant au moins un œil (112, 112'), d'un utilisateur du verre de lunettes (140, 140'), la capture de l'au moins une image à l'aide du verre de lunettes (140, 140') entraînant une modification (144, 150) d'une zone, visible à travers le verre de lunettes (140, 140'), de la partie oculaire (110) de l'utilisateur du verre de lunettes (140, 140') ; et

b) déterminer au moins un paramètre optique du verre de lunettes (140, 140') par traitement de l'au moins une image, le paramètre optique désignant une valeur pour une propriété du verre de lunettes (140, 140') qui est réglée lors de la fabrication du verre de lunettes (140, 140'), afin d'obtenir la correction souhaitée d'amétropies d'au moins un œil (112, 112') d'un utilisateur du verre de lunettes (140, 140'),

**caractérisé en ce que**

l'au moins un paramètre optique du verre de lunettes (140, 140') est déterminé sur la base de la modification $V_E$ la zone visible de la partie oculaire de l'utilisateur (110) selon l'équation (1) :

$$V_E = \frac{1}{1-\frac{d}{n}D_1} \cdot \frac{1}{1-((e+e')S')}, \qquad (1)$$

lorsque $d$ = 0,0005 m pour le verre moins (142, 142') et $d$ = 0,001 m pour le verre plus (148, 148'), $n$ un indice de réfraction d'un matériau du verre de lunettes (140, 140') de 1,5 ou 1,52 ou 1,6 ou 1,67 ou 1,74 ou une combinaison de ceux-ci, $e$ = 0,012 m et $e'$ = 0,013348 m étant utilisés, et $S'$ correspondant à l'indice focométrique du verre de lunettes (140, 140') et $D_1$ correspondant au pouvoir réfringent de la surface avant du verre de lunettes (140, 140'), la modification $V_E$ concernant une dimension géométrique de l'au moins un œil (112, 112'), la dimension géométrique de l'au moins un œil (112, 112') étant sélectionnée parmi :

- un diamètre commun de la pupille (114, 114') et de l'iris (116, 116') ;
- une distance horizontale (122, 122') entre un coin droit (124, 124') de l'œil et un coin gauche (126, 126') de l'œil ; ou
- une distance verticale (128, 128') entre une paupière supérieure (134, 134') et une paupière inférieure (132, 132').

7. Dispositif (160) de détermination d'au moins un paramètre optique d'un verre de lunettes (140, 140'), le paramètre optique désignant une valeur pour une propriété du verre de lunettes (140, 140') qui est réglée lors de la fabrication du verre de lunettes (140, 140') afin d'obtenir une correction souhaitée d'amétropies de l'au moins un œil (112, 112') d'un utilisateur du verre de lunettes (140, 140'), le dispositif (160) comprenant :

- au moins une caméra (166) qui est conçue pour capturer au moins une image à l'aide d'un verre de lunettes (140, 140'), l'au moins une caméra (166) étant conçue pour capturer l'au moins une image de sorte que l'au moins une image comprenne une partie oculaire (110, 110'), incluant au moins un œil (112, 112'), d'un utilisateur du verre de lunettes (140, 140'), la capture de l'au moins une image à l'aide du verre de lunettes (140, 140') entraînant une modification (144, 150) d'une zone, visible à travers le verre de lunettes (140, 140'), de la partie oculaire (110) de l'utilisateur du verre de lunettes (140, 140') ; et
- une unité d'évaluation (170) qui est conçue pour déterminer au moins un paramètre optique du verre de lunettes (140, 140') par traitement de l'au moins une image,

**caractérisé en ce que**

l'au moins une caméra (166) est conçue pour déterminer l'au moins un paramètre optique du verre de lunettes (140, 140') sur la base de la modification $V_E$ de la zone visible de la partie oculaire (110) de l'utilisateur selon l'équation (1) :

$$V_E = \frac{1}{1-\frac{d}{n}D_1} \cdot \frac{1}{1-((e+e')S')}, \qquad (1)$$

lorsque d = 0,0005 m pour le verre moins (142, 142') et d = 0,001 m pour le verre plus (148, 148'), n un indice de réfraction d'un matériau du verre de lunettes (140, 140') de 1,5 ou 1,52 ou 1,6 ou 1,67 ou 1,74 ou une combinaison de ceux-ci, e = 0,012 m et e' = 0,013348 m étant utilisés, et $S'$ correspondant à l'indice focométrique du verre de lunettes (140, 140') et $D_1$ correspondant au pouvoir réfringent de la surface avant du verre de lunettes (140, 140'), la modification $V_E$ concernant une dimension géométrique de l'au moins un œil (112, 112'), la dimension géométrique de l'au moins un œil (112, 112') étant sélectionnée parmi :

- un diamètre commun de la pupille (114, 114') et de l'iris (116, 116') ;
- une distance horizontale (122, 122') entre un coin droit (124, 124') de l'œil et un coin gauche (126, 126') de l'œil ; ou
- une distance verticale (128, 128') entre une paupière supérieure (134, 134') et une paupière inférieure (132, 132').

8. Dispositif (110) selon la revendication précédente, **caractérisé en ce que** le dispositif (160) est en outre conçu pour déterminer une distance entre le dispositif (160) et au moins un œil (112, 112') de l'utilisateur.

9. Procédé de détermination d'au moins un paramètre optique d'un verre de lunettes (140, 140'), le paramètre optique désignant une valeur pour une propriété du verre de lunettes (140, 140') qui est réglée lors de la fabrication du verre de lunettes (140, 140') afin d'obtenir une correction souhaitée d'amétropies de l'au moins un œil (112, 112') d'un utilisateur du verre de lunettes (140, 140'), le procédé comprenant les étapes suivantes :

a) capturer au moins une image à l'aide d'un verre de lunettes (140, 140'), l'au moins une image comprenant une partie oculaire (110, 110'), incluant au moins un œil (112, 112'), et/ou une partie de visage d'un utilisateur du verre de lunettes (140, 140') qui est adjacente à au moins un œil (112, 112'), la capture de l'au moins une image à l'aide du verre de lunettes (140, 140') entraînant une modification (144, 146, 150, 152) d'une zone de la partie oculaire (110) qui est visible à travers le verre de lunettes (140, 140') et/ou de la partie de visage de l'utilisateur du verre de lunettes (140, 140') qui est adjacente à l'au moins un œil (112, 112') ; et
b) déterminer au moins un paramètre optique du verre de lunettes (140, 140') par traitement de l'au moins une image,

**caractérisé en ce que**

pour déterminer la modification (144, 146, 150, 152), au moins une autre image est capturée en plus comme image de comparaison sans utiliser le verre de lunettes (140, 140') ou **en ce qu'**une référence est faite à une image de comparaison déjà existante, la détermination de l'au moins un paramètre optique du verre de lunettes (140, 140') étant effectuée par traitement d'image d'un motif mobile, le motif mobile comprenant l'au moins une image obtenue à l'aide d'un verre de lunettes (140, 140') et l'au moins une image de comparaison,
le traitement d'image comprenant au moins un algorithme d'analyse d'image,
au moins un paramètre de statistiques d'image étant utilisé pour l'analyse d'image,
l'au moins un paramètre de statistiques d'image étant sélectionné parmi

- une orientation d'au moins une zone sélectionnée dans l'au moins une image, notamment un bord dans l'au moins une image ;
- une distribution de valeurs de gris dans l'au moins une image ou au moins une zone sélectionnée de celle-ci ;
- un flux optique du motif mobile en direction et en expression ;
- une variation locale et globale du motif mobile ; et/ou
- une distribution de fréquences de lieu par transformation de Fourier,

la détermination de l'au moins un paramètre optique du verre de lunettes (140, 140') étant effectuée au moyen d'une classification ou d'une régression de l'au moins un paramètre de statistique d'image à l'aide d'un procédé d'apprentissage automatique, en particulier au moyen d'un réseau neuronal.

10. Procédé selon la revendication précédente, **caractérisé en ce que**
avant l'étape b), l'entraînement du réseau neuronal est effectué de façon à obtenir un réseau neuronal entraîné.

11. Procédé selon la revendication précédente, **caractérisé en ce qu'**un grand nombre d'ensembles de données d'entraînement est utilisé pour entraîner le réseau de neurones, chaque ensemble de données d'entraînement comportant une paire formée

- d'au moins une image et d'au moins une image de comparaison et
- d'au moins un paramètre optique associé du verre de lunettes (140, 140') ou d'au moins un effet optique lié au verre de lunettes (140, 140').

Fig. 1 A

Fig. 1 B

Fig. 1 C

EP 3 956 721 B1

Fig. 2 A

Fig. 2 B

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011115239 A1
- EP 2608109 A1
- EP 2830001 A1
- US 20150029323 A1
- WO 2016181310 A1
- WO 2017125902 A1
- WO 2017134275 A1

**In der Beschreibung aufgeführte Nicht-Patentliteratur**

- **NACH L. N. THIBOS ; W. WHEELER ; D. HORNER.** Power Vectors: An Application of Fourier Analysis to the Description and Statistical Analysis of Refractive Error. *Optometry and Vision Science,* 1997, vol. 74 (6), 367-375